# FASCICULE DE BREVET EUROPEEN

(11) **EP 3 857 298 B1**
(45) Date de publication et mention de la délivrance du brevet: **17.09.2025**
(21) Numéro de dépôt: 19770138.6
(22) Date de dépôt: 24.09.2019
(51) Int. Cl.: G02C 13/00, G06T 7/30

(54) **DÉTERMINATION AUTOMATIQUE DES PARAMÈTRES NÉCESSAIRES À LA RÉALISATION DE LUNETTES**
AUTOMATISCHE BESTIMMUNG DER FÜR DIE KONSTRUKTION EINER BRILLE NOTWENDIGEN PARAMETER
AUTOMATIC ESTABLISHMENT OF PARAMETERS NECESSARY FOR CONSTRUCTING SPECTACLES

(30) Priorité: 24.09.2018 FR 1858644
(43) Date de publication de la demande: 04.08.2021
(73) Titulaire: ESSILOR INTERNATIONAL, 94220 Charenton-Le-Pont (FR)
(72) Inventeur: THOMET, Pascal, 75015 PARIS (FR)
(74) Mandataire: Ipsilon
(86) Numéro de dépôt international: PCT/EP2019/075754
(87) Numéro de publication internationale: WO 2020/064763

(56) Documents cités:
- WO-A1-2006/092479
- FR-A1- 2 719 463
- FR-A1- 2 857 771
- FR-B1- 2 857 771
- US-A1- 2009 021 693
- US-A1- 2010 128 220
- US-A1- 2015 015 848

## Description

### DOMAINE DE L'INVENTION

L'invention concerne le domaine de la prise de mesures effectuées habituellement par un opticien en vue de la personnalisation de lentilles ophtalmiques correctrices et de leur montage sur une monture. Plus précisément, l'invention concerne le domaine de la métrologie optique, c'est-à-dire la mesure des différents paramètres nécessaires à la réalisation de lunettes.

### ARRIERE-PLAN TECHNOLOGIQUE

Afin de réaliser des lunettes, et notamment des lunettes correctrices de la vue, il est nécessaire de tailler des lentilles correctrices en fonction de divers paramètres liés au sujet portant les lunettes et à la monture des lunettes.

De manière connue en soi, une monture comporte classiquement deux cercles ou demi-montures qui sont destinés à accueillir chacun une lentille correctrice détourée. Ces deux cercles sont reliés l'un à l'autre par un pontet et portent chacun une branche, fixée par l'intermédiaire d'un tenon. Chaque cercle présente une rainure, communément appelée drageoir, qui court le long de sa face intérieure.

Les paramètres d'une monture sont généralement donnés dans le système « boxing » suivant la norme ISO 8624 qui correspond au rectangle englobant (ou boxing) de la découpe extérieure des lentilles correctrices (et donc au fond du drageoir de la monture lorsque celle-ci est cerclée). On appelle « cote D » la distance entre les deux rectangles englobants d'une monture donnée, « cote A » la largeur de chaque rectangle englobant, « cote B » leur hauteur et « galbe » l'angle formé entre l'un des rectangles englobants et le plan comprenant les segments naseaux (segments sensiblement verticaux et les plus proche du nez) des rectangles englobant droits et gauches de la monture. La valeur de la cambrure de la monture dite base monture et la valeur de la courbure du verre dite base du verre peuvent également être utilisées.

Habituellement, un opticien mesure directement les paramètres liés au sujet et les paramètres définissant les rectangles englobants sur la monture à l'aide d'un réglet.

Cette méthode n'étant pas très précise, il a été proposé dans le document FR 2 719 463 de prendre une image du sujet portant la monture à l'aide d'une caméra vidéo puis de déterminer, sur l'image et de façon automatique, la position des lignes horizontales et verticales tangentes aux lentilles correctrices (alignées sur les côtés des rectangles englobants) par analyse du gradient de luminance et extraction des contours de la monture. Pour cela, ce document propose de définir une fenêtre au sein de l'image et de déterminer, dans cette fenêtre, les points dont la norme du gradient de la luminance est supérieure à une valeur seuil pour obtenir les contours intérieur et extérieur de la monture. La forme de la monture puis la tangente au contour intérieur de la monture sont en outre déterminée dans cette fenêtre à partir des contours.

Toutefois, il ressort que les contours pertinents pour déterminer les paramètres des rectangles englobants ne sont pas forcément nets et/ou continus et/ou visibles et/ou homogènes (en raison notamment des reflets sur les images, la couleur du cerclage et surtout le drageoir qui peut présenter des contours complexes et difficiles à visualiser sur une image). Il en résulte que sur l'image les contours recherchés sont souvent partiellement invisibles ou faiblement marqués, et de multiples contours parasites sont souvent présents, en étant très proche et parfois plus marqués que les contours recherchés, ce qui peut rendre difficile la détection de ces contours et donc la détermination des paramètres définissant les rectangles englobants.

Le document US 2015/015848 décrit un procédé de détermination automatique de paramètres en vue comprenant les étapes suivantes :
- prise d'une première image de la monture et d'une deuxième image distincte de la première image
- identification d'un repère de référence dans chaque image,
- modification d'au moins un des paramètres du modèle défini précédemment,
- dans chaque image, simuler une pluralité de valeurs pour un paramètre donné (ex : distance œil - lentille) puis déterminer quelle valeur de ce paramètre est la plus proche du paramètre réel et réitérer cette étape jusqu'à ce que les itérations donnent un résultat.

Toutefois, ce document n'enseigne pas comment positionner les boxings (qui sont les paramètres de monture) sur les images.

Le document WO 2006/092479 décrit un procédé de détermination automatique d'une caractéristique géométrique d'un segment anatomique (bras, jambe, etc.) comprenant les étapes suivantes :
- prise d'une première image et d'une deuxième image distincte de la première image
- définition d'une région d'intérêt dans la première image,
- identification dans la région d'intérêt d'un point anatomique recherché et détermination sur les autres images des coordonnées du point anatomique d'intérêt par corrélation et déduction des coordonnées réelles du point anatomique.

L'objectif de ce document est de mesurer des longueurs anatomiques, et non de déterminer des paramètres de vision d'un porteur.

### RESUME DE L'INVENTION

Un objectif de l'invention est de proposer une méthode alternative permettant d'assurer de manière automatique une mesure reproductible, fiable, indépendante et plus robuste de tout ou partie des paramètres nécessaires en vue de la personnalisation et la fabrication d'une paire de lunette, tels que notamment les paramètres définissant les rectangles englobant des lentilles correctrices de la paire de lunette, la forme des cercles, la base monture, la base du verre, les paramètres de centrage des lentilles correctrices dans la monture (demi-écarts pupillaires et hauteurs pupillaires), ou de personnalisation de la lentille correctrice (distance verre œil, position du centre de rotation de l'œil par rapport au à la lentille correctrice, angle de cap, angle pantoscopique, forme du verre, etc...), qui soit plus robuste et plus précises que dans l'art antérieur et qui ne nécessite pas nécessairement de détecter en amont la forme des lentilles.

Pour cela, l'invention propose un procédé de détermination automatique de paramètres en vue du centrage et/ou de la personnalisation de lentilles correctrices de lunettes, lesdites lunettes comprenant une monture et le procédé comprenant les étapes suivantes :
- S1 : prise d'une première image de la monture suivant un premier angle de vue,
- S2 : prise d'une deuxième image de la monture suivant un deuxième angle de vue, le premier angle de vue étant différent du deuxième angle de vue,
- S3 : identification, dans la première image et dans la deuxième image, de repères visuels et déduction, d'un repère de référence lié à ces repères visuels,
- S4 : détermination d'un élément de la monture,
- S5 : définition d'un modèle initial de la monture dans le repère de référence à partir d'un ensemble de paramètres initiaux prédéfinis,
- S6 : définition d'une région d'intérêt englobant l'élément de la monture dans le modèle initial,
- S7 : projection, dans la première image et dans la deuxième image, de la région d'intérêt,
- S8 : comparaison des projections de la région d'intérêt dans la première image et dans la deuxième image et évaluation d'une similarité entre lesdites projections,
- S9 : modification d'au moins un des paramètres du modèle défini à l'étape S5,
- S10 : réitération des étapes S6 à S9 jusqu'à obtention d'un maximum de similarités entre les projections de la région d'intérêt dans la première image et dans la deuxième image,
- S11 : déduction de l'au moins un des paramètres du modèle associé aux projections présentant le maximum de similarités,
- centrage et/ou personnalisation desdites lentilles correctrices pour réaliser lesdites lunettes.

Certaines caractéristiques préférées mais non limitatives du procédé de détermination automatique défini ci-dessus sont les suivantes, prises individuellement ou en combinaison :
- l'étape S8 de comparaison est réalisée par comparaison des gradients dans chacune des projections.
- les gradients sont comparés à l'aide d'un filtre de Sobel de sorte à obtenir deux images filtrées, puis les deux images filtrées sont comparées en faisant la somme des carrés des différences point à point ou en calculant une corrélation en faisant le produit point à point .
- l'élément de la monture comprend un pontet et le ou les paramètres du modèle modifiés à l'étape S9 correspondent à une translation dans le repère de référence du modèle défini à l'étape S5 suivant un axe sensiblement normal à un plan sagittal de la tête d'un sujet ou suivant un axe sensiblement normal à un plan coronal de la tête dudit sujet.
- la première image et la deuxième image sont prises au cours des étapes S1 et S2 par des dispositifs de prise de vue dont les axes de visée forment tous deux un angle non nul avec un plan de symétrie de la monture, par exemple un angle de +10° et de -10°, respectivement.
- lorsque le ou les paramètres du modèle modifiés à l'étape S9 correspondent à une translation dans le repère de référence du modèle défini à l'étape S5 suivant l'axe normal au plan sagittal, le procédé comprend en outre, préalablement à l'étape S8 de comparaison, une étape de transformation de la projection de la région d'intérêt dans la deuxième image par application d'une symétrie axiale par rapport au plan sagittal à un plan normal à la deuxième image et passant par son centre à ladite projection de la région d'intérêt dans la deuxième image de sorte à obtenir une projection miroir, l'étape S8 de comparaison étant appliquée à ladite projection miroir.
- les repères visuels comprennent des cibles fixées sur un accessoire solidaire de la monture et, au cours de l'étape S9, un seul paramètre est modifié, ledit paramètre correspond à une translation suivant l'un des axes du repère de référence.
- l'élément de la monture comprend un tenon gauche ou un tenon droit et le ou les paramètres du modèle qui modifiés à l'étape S9 sont choisis de sorte à modifier une inclinaison de la région d'intérêt par rapport à un plan tangent à des segments verticaux d'un rectangle englobant d'une des lentilles correctrices.
- la première image est prise au cours de l'étape S1 par un dispositif de prise de vue dont un axe de visée est sensiblement compris dans un plan sagittal d'une tête du sujet et la deuxième image est prise au cours de l'étape S2 par un dispositif de prise de vue dont un axe de visée forme un angle non nul avec le plan de symétrie, par exemple un angle de 10°.
- le dispositif de prise de vue prenant la deuxième image est positionné par rapport au plan de symétrie de sorte à être plus proche du tenon déterminé comme élément de la monture à l'étape S4 que de l'autre tenon de la monture.
- les étapes S1 à S11 sont d'abord mises en œuvre sur un élément de la monture comprenant un pontet de la monture, le ou les paramètres du modèle modifiés à l'étape S9 correspondent à une translation dans le repère de référence du modèle défini à l'étape S5 suivant un axe sensiblement normal à un plan sagittal d'une tête du sujet ou suivant un axe sensiblement normal à un plan coronal de la tête dudit sujet, puis
- les étapes S1 à S11 sont mises en œuvre sur un élément de la monture comprenant un tenon de la monture, le ou les paramètres du modèle qui modifiés à l'étape S9 sont choisis de sorte à modifier une inclinaison de la région d'intérêt par rapport à un plan tangent à des segments verticaux d'un rectangle englobant d'une des lentilles correctrices.
- le procédé comprend en outre, suite à l'étape S11, une étape de détection d'un contour de la monture dans les projections, dans la première image et dans la deuxième image, de la région d'intérêt, de sorte à déterminer des paramètres d'au moins un rectangle englobant des lentilles.
- la première image et la deuxième image sont prises à l'aide d'un premier dispositif de prise de vue et d'un deuxième dispositif de prise de vue, respectivement, le premier dispositif de prise de vue et le deuxième dispositif de prise de vue formant chacun un angle différent avec un plan de symétrie de la monture, le premier dispositif de prise de vue étant plus proche d'un tenon gauche de la monture tandis que le deuxième dispositif de prise de vue est plus proche d'un tenon droit de ladite monture et l'étape de détection d'un contour comprend une sous-étape de détection d'un contour interne droit de la monture dans la projection de la région d'intérêt dans la première image et une sous-étape de détermination d'un contour d'un contour interne gauche de la monture dans la projection de la région d'intérêt dans la deuxième image.
- le procédé comprend en outre, suite à la détection du contour interne droit et du contour interne gauche de la monture, une étape de déduction d'une position, dans le repère de référence, de segments verticaux internes des rectangles englobant des lentilles correctrices.
- la première image et la deuxième image sont prises à l'aide d'un premier dispositif de prise de vue et d'un deuxième dispositif de prise de vue, respectivement, le premier dispositif de prise de vue et le deuxième dispositif de prise de vue formant chacun un angle différent avec un plan de symétrie de la monture, le premier dispositif de prise de vue étant plus proche d'un tenon gauche de la monture tandis que le deuxième dispositif de prise de vue est plus proche d'un tenon droit de ladite monture et l'étape de détection d'un contour comprend une sous-étape de détection d'un contour externe droit de la monture dans la projection de la région d'intérêt dans la première image et une sous-étape de détermination d'un contour d'un contour externe gauche de la monture dans la projection de la région d'intérêt dans la deuxième image.
- le procédé comprend en outre, suite à la détection des contours externes et internes des lentilles, une étape de déduction d'une position, dans le repère de référence, de segments verticaux externes et internes des rectangles englobant des lentilles correctrices.
- le procédé comprend en outre une étape de correction de perspective dans la première image et dans la deuxième image préalablement à l'étape S8 de comparaison.
- le procédé comprend en outre, préalablement à l'étape S3, une étape supplémentaire au cours de laquelle au moins une troisième image de la monture est acquise, les étapes S3 à S11 étant alors mises en œuvre sur la première, la deuxième et la ou le(s) troisième(s) image(s).
- la ou les troisième(s) image(s) sont prises suivant un même point de vue que la première image et/ou la deuxième image.
- la ou les troisième(s) image(s) sont prises suivant un point de vue différent que la première image et la deuxième image.
- au cours de l'étape S8, la similarité est évaluée en effectuant une somme du carré des différences deux à deux pour tout couple d'images parmi l'ensemble des première, deuxième et troisième(s) 'images disponibles.
- les étapes S9 à S11 sont réalisées en changeant de couple d'images à chaque itération de l'étape S10, les étapes S1 à S3 étant préalablement réalisées au moins une fois pour chaque image.
- la première image est acquise à l'aide d'un premier dispositif de prise de vue, la deuxième image est acquise à l'aide d'un deuxième dispositif de prise de vue, l'un parmi le premier et le deuxième dispositif de prise de vue étant plus proche du sol que l'autre parmi le dispositif de prise de vue.

Selon un deuxième aspect, l'invention propose également un procédé de détermination d'une forme d'un contour d'une lentille pour une monture, ledit procédé comprenant les étapes suivantes :
- détermination automatique de paramètres définissant un rectangle englobant de la lentille conformément au procédé conforme au premier aspect, et
- détermination de la forme de la lentille à partir des paramètres ainsi déterminés de la monture.

Certaines caractéristiques préférées mais non limitatives du procédé de détermination d'une forme d'un contour défini ci-dessus sont les suivantes, prises individuellement ou en combinaison :
- l'étape de détermination de la forme de la lentille comprend les sous-étapes suivantes : normalisation de la forme de la lentille à partir des paramètres définissant le rectangle englobant de la lentille, et définition d'un modèle paramétrique de la forme normalisée de la lentille.
- l'étape de définition d'un modèle paramétrique est réalisée par l'utilisation l'une au moins des méthodes suivantes : analyse en composantes principales, détermination d'une transformée de Fournier, splines, B-Spline, B-splines rationnelles non uniformes.
- le procédé comprend en outre les étapes suivantes:
   ▪ projection d'une région d'intérêt correspondant à tout ou partie du contour défini par le modèle paramétrique dans la première image et/ou la deuxième image,
   ▪ évaluation d'une similarité entre chaque point de la projection de la région d'intérêt dans la première image et/ou la deuxième image et un contour dans ladite image,
   ▪ modification d'au moins un paramètre du modèle paramétrique,
   ▪ réitération des étapes de projection et d'évaluation jusqu'à obtention d'un maximum de similarité entre la projection de la région d'intérêt dans la première image et/ou dans la deuxième image et le contour, et
   ▪ déduction du ou des paramètres du modèle paramétrique correspondant au contour de la lentille.
- l'étape d'évaluation d'une similarité comprend l'une au moins des méthodes suivantes :
   ▪ établissement d'un score pour la première image et/ou la deuxième image indiquant si chaque point de la projection de la région d'intérêt dans l'image correspond à un contour dans ladite image,
   ▪ comparaison des gradients.

Selon un troisième aspect, l'invention propose un dispositif de détermination automatique de paramètres en vue du centrage et/ou de la personnalisation de lentilles correctrices de lunettes, lesdites lunettes comprenant une monture, le dispositif comprenant des moyens pour la mise en œuvre d'un procédé de détermination comme décrit ci-dessus comprenant :
- des moyens de prise d'une première image de la monture suivant un premier angle de vue,
- des moyens de prise d'une deuxième image de la monture suivant un deuxième angle de vue, le premier angle de vue étant différent du deuxième angle de vue,
- des moyens d'identification, dans la première image et dans la deuxième image, de repères visuels et déduction, pour chaque image, d'un repère de référence lié à ces repères visuels,
- des moyens de détermination d'un élément de la monture,
- des moyens de définition d'un modèle initial de la monture dans le repère de référence à partir d'un ensemble de paramètres initiaux prédéfinis,
- des moyens de définition d'une région d'intérêt englobant l'élément de la monture dans le modèle initial,
- des moyens de projection, dans la première image et dans la deuxième image, de la région d'intérêt,
- des moyens de comparaison des projections de la région d'intérêt dans la première image et dans la deuxième image et évaluation d'une similarité entre lesdites projections,
- des moyens de modification d'au moins un des paramètres du modèle défini à l'étape S5,
- des moyens de réitération des étapes S6 à S9 jusqu'à obtention d'un maximum de similarités entre les projections de la région d'intérêt (9) dans la première image et dans la deuxième image,
- des moyens de déduction de l'au moins un des paramètres du modèle associé aux projections présentant le maximum de similarités.

Optionnellement, l'un parmi les premiers et les deuxièmes moyens de prise d'une image est plus proche du sol que l'autre parmi les premiers et les deuxièmes moyens de prise d'une image.

Selon un quatrième aspect, l'invention propose un système de détermination automatique de paramètres en vue du centrage et/ou de la personnalisation de lentilles correctrices de lunettes, lesdites lunettes comprenant une monture, le système comprenant un dispositif de détermination comme décrit ci-dessus et des cibles fixées sur un accessoire solidaire de la monture, les repères visuels comprenant les cibles.

Selon un cinquième aspect, l'invention propose également un procédé de détection automatique d'un contour d'une lentille de lunettes, ledit procédé comprenant les étapes suivantes :
(i) acquisition d'au moins une image de la lentille,
(ii) détermination d'un rectangle englobant de la lentille dans ladite image, ledit rectangle englobant comprenant au moins une cote correspondant à une largeur du rectangle englobant et une cote correspondant à une hauteur du rectangle englobant,
(iii) définition d'un modèle paramétrique du contour de la lentille.
(iv) projection dans l'image d'une région d'intérêt correspondant à tout ou partie du contour défini par le modèle paramétrique,
(v) évaluation d'une similarité entre chaque point de la projection de la région d'intérêt dans l'image et un contour dans ladite image,
(vi) modification d'au moins un paramètre du modèle paramétrique,
(vii) réitération des étapes (iv) de projection et (v) d'évaluation jusqu'à obtention d'un maximum de similarité entre la projection de la région d'intérêt et le contour, et
(viii) déduction du ou des paramètres du modèle paramétrique correspondant au contour de la lentille.

Certaines caractéristiques préférées mais non limitatives du procédé de détection automatique d'un contour défini ci-dessus sont les suivantes, prises individuellement ou en combinaison :
- l'étape de définition du modèle paramétrique est réalisée par l'utilisation l'une au moins des méthodes suivantes : analyse en composantes principales, détermination d'une transformée de Fournier, splines, B-Spline, B-splines rationnelles non uniformes (NURBS).
- l'étape (v) d'évaluation d'une similarité comprend l'une au moins des méthodes suivantes :
   ▪ établissement d'un score pour la première image et/ou la deuxième image indiquant si chaque point de la projection de la région d'intérêt dans l'image correspond à un contour dans ladite image,
   ▪ comparaison des gradients.
- le procédé comprend en outre, préalablement à l'étape (iii) de définition d'un modèle paramétrique, une étape préalable de normalisation du contour de la lentille à partir des paramètres définissant le rectangle englobant de la lentille.
- l'étape (ii) de détermination d'un rectangle englobant de la lentille est réalisée par un opérateur en positionnant des segments du rectangle englobant sur l'image.
- deux images sont acquises au cours de l'étape (i) d'acquisition, et dans lequel les étapes (iv) de projection, (v) d'évaluation, (vi) de modification et (vii) de réitération sont mises en œuvre pour chaque image.
- l'étape (ii) de détermination d'un rectangle englobant de la lentille est réalisée de manière automatique à partir d'au moins deux images de la lentille.
- l'étape (ii) de détermination d'un rectangle englobant comprend les sous-étapes suivantes :
   ▪ S1 : prise d'une première image de la monture suivant un premier angle de vue,
   ▪ S2 : prise d'une deuxième image de la monture suivant un deuxième angle de vue, le premier angle de vue étant différent du deuxième angle de vue,
   ▪ S3 : identification, dans la première image et dans la deuxième image, de repères visuels et déduction, pour chaque image, d'un repère de référence lié à ces repères visuels,
   ▪ S4 : détermination d'un élément de la monture,
   ▪ S5 : définition d'un modèle initial de la monture dans le repère de référence à partir d'un ensemble de paramètres initiaux prédéfinis,
   ▪ S6 : définition d'une nouvelle région d'intérêt englobant l'élément de la monture dans le modèle initial,
   ▪ S7 : projection, dans la première image et dans la deuxième image, de la région d'intérêt,
   ▪ S8 : comparaison des projections de la région d'intérêt dans la première image et dans la deuxième image et évaluation d'une similarité entre lesdites projections,
   ▪ S9 : modification d'au moins un des paramètres du modèle défini à l'étape S5,
   ▪ S10 : réitération des étapes S6 à S9 jusqu'à obtention d'un maximum de similarités entre les projections de la nouvelle région d'intérêt dans la première image et dans la deuxième image,
   ▪ S11 : déduction de l'au moins un des paramètres du modèle associé aux projections présentant le maximum de similarités.
- le procédé comprend en outre, suite à l'étape S11, une étape de détection d'un contour de la monture dans les projections, dans la première image et dans la deuxième image, de la nouvelle région d'intérêt, de sorte à déterminer les cotes correspondant à la largeur et à la hauteur du rectangle englobant des lentilles.
- la première image et la deuxième image sont acquises lors de l'étape (i) d'acquisition à l'aide d'un premier dispositif de prise de vue et d'un deuxième dispositif de prise de vue, respectivement, le premier dispositif de prise de vue et le deuxième dispositif de prise de vue formant chacun un angle différent avec un plan de symétrie de la monture, le premier dispositif de prise de vue étant plus proche d'un tenon gauche de la monture tandis que le deuxième dispositif de prise de vue est plus proche d'un tenon droit de ladite monture, l'étape de détection d'un contour comprend une sous-étape de détection d'un contour externe et d'un contour interne de la lentille dans la projection de la région d'intérêt dans la première image et le procédé comprenant en outre, suite à la détection des contours externe et interne de la lentille, une étape de déduction d'une position, dans le repère de référence, de segments verticaux externe et interne du rectangle englobant de la lentille et de la cote correspondant à la largeur dudit rectangle englobant.
- l'étape de détection d'un contour comprend une sous-étape de détection d'un contour horizontal supérieur et d'un contour horizontal inférieure dans la projection de la région d'intérêt dans l'une au moins parmi la première et la deuxième image et le procédé comprend en outre, suite à la détection desdits contours horizontaux, une étape de déduction d'une position, dans le repère de référence, de segments horizontaux du rectangle englobant la lentille et de la cote correspondant à la hauteur dudit rectangle englobant.

L'invention peut être généralisée des manières suivantes avec trois prises d'images ou plus:
- Lors des étapes S1 à S8, il est possible d'utiliser une troisième prise d'image ou plus, ayant des angles de vue identiques ou différents des deux premières images. L'étapes S3 se réalise sur cette/ces images de la même manière que pour les deux autres images et l'étape S8 utilise des informations supplémentaires pour le calcul de similarité issues des images supplémentaires. Par exemple la différence point à point des régions d'intérêt peut être remplacée par la somme du carré des différences deux à deux pour tout couple d'images parmi l'ensemble d'images disponible.
- Par ailleurs les étapes S9 à S11 peuvent être réalisées en changeant de couple d'images (première et deuxième image) à chaque itération de l'étape S10, les étapes S1/S2 et S3 étant préalablement réalisées au moins une fois pour chaque image.

Optionnellement, dans le cas où les mesures sont effectuées sans accessoire disposé sur la monture, le dispositif comprend en outre une caméra supplémentaire plus proche du sol que les autres caméras afin de permettre la mesure de l'angle pantoscopique de la monture du sujet. Cela permet en effet d'améliorer la qualité de la mesure de cet angle.

### BREVE DESCRIPTION DES DESSINS

D'autres caractéristiques, buts et avantages de la présente invention apparaîtront mieux à la lecture de la description détaillée qui va suivre, et au regard des dessins annexés donnés à titre d'exemples non limitatifs et sur lesquels :

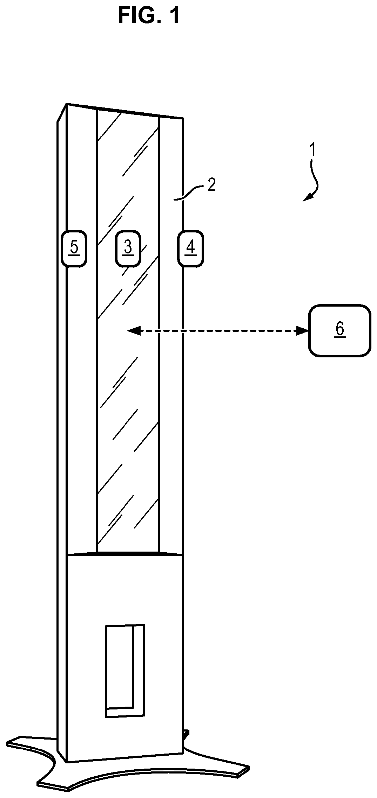

La figure 1 est une vue en perspective illustrant schématiquement un exemple de réalisation d'un équipement pouvant être utilisé pour la mise en œuvre d'un procédé conforme à l'invention.
La figure 2a illustre un exemple de première image et de deuxième image d'un sujet portant une monture sur laquelle est fixé un exemple d'accessoire, sur lesquelles ont été représentées les limites de la projection d'une région d'intérêt, ici au niveau du pontet de la monture. La projection dans la première image et la projection miroir associée la deuxième image ainsi que leur comparaison sont par ailleurs représentées, de droite à gauche, sous la première image et la deuxième image.
La figure 2b illustre l'exemple de première image et de deuxième image de la figure 2a après modification de la coordonnée selon l'axe X du modèle de la monture dans le repère de référence de l'accessoire. La projection correspondante dans la première image et la projection miroir associée la deuxième image ainsi que leur comparaison sont par ailleurs représentées, de droite à gauche, sous la première image et la deuxième image.

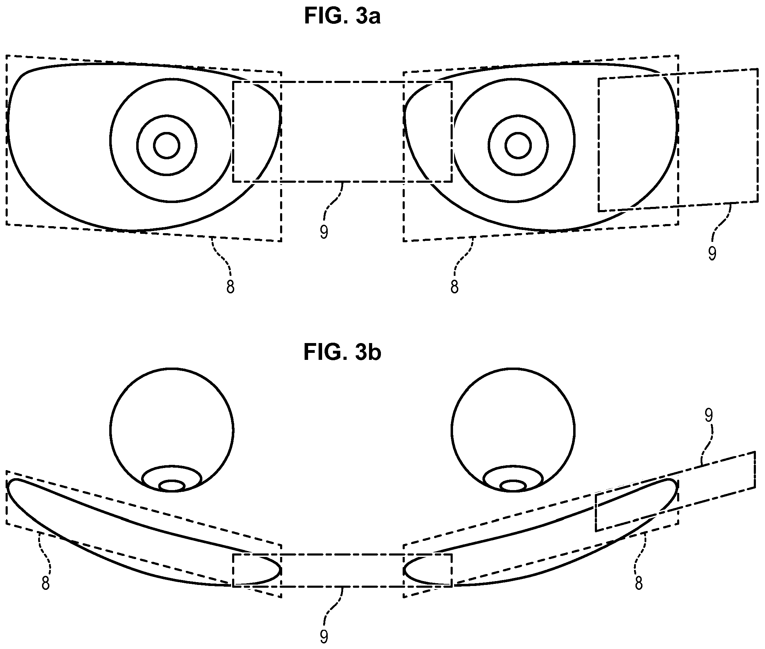

La figure 3a est un exemple de modèle de monture pouvant être utilisé dans un procédé conforme à l'invention, vu de face. On notera que les yeux du sujet ont été schématisés afin de clarifier ce modèle, bien que ceux-ci ne soient pas nécessaires pour la mise en œuvre du procédé.
La figure 3b représente l'exemple de modèle de monture de la figure 3a vue du dessus.

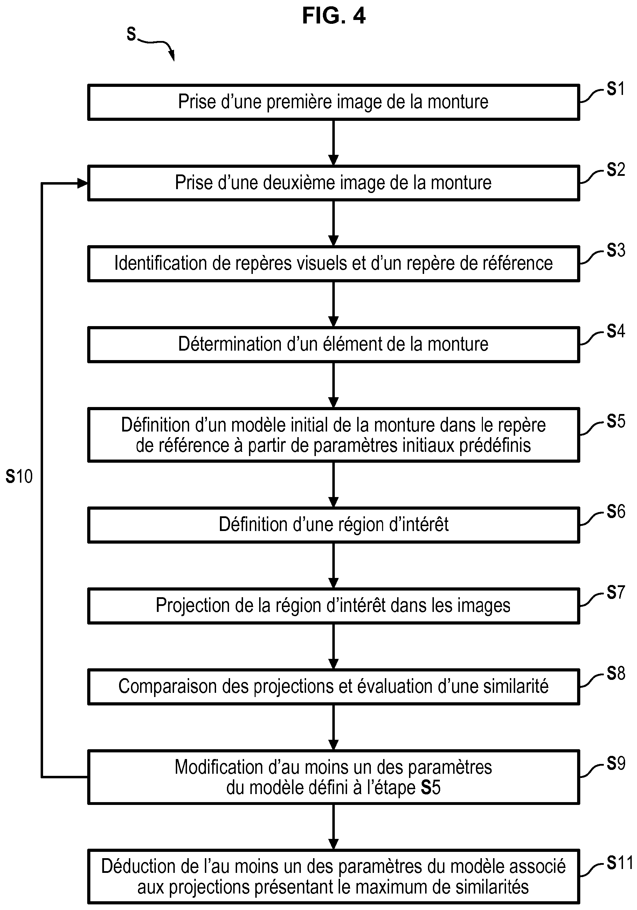

La figure 4 est un organigramme illustrant des exemples d'étapes d'un procédé conforme à l'invention.

### DESCRIPTION DETAILLEE D'UN MODE DE REALISATION

Afin de déterminer le centrage et/ou la personnalisation de lentilles correctrices de lunettes de manière automatisée et reproductible, l'invention propose un procédé de détermination automatique au cours duquel on acquiert deux images de la monture suivant des angles de vue différents et on détermine, à partir de ces images, la position de la monture dans un repère de référence défini à partir de repères visuels identifiables sur ces images, par optimisation d'un modèle de la monture.

Les paramètres permettant le centrage et la personnalisation des lentilles correctrices pouvant être déterminés à l'aide du procédé comprennent, de manière non limitative : les paramètres définissant la dimension des rectangles englobants 8 des lentilles (cotes A et B) leur position relative (cote D et galbe), leur position par rapport à la direction du regard pour une posture de référence (par exemple, pour la posture de vision de loin, l'angle pantoscopique et l'angle de cap), les paramètres de centrage qui comprennent les demi-écarts pupillaires et les hauteurs. Des paramètres pouvant être utilisés pour personnalisation du verre sont la distance verre-œil ou la position du centre de rotation de l'œil par rapport au verre, l'angle pantoscopique, le galbe et le cap. Optionnellement, des paramètres décrivant la forme des cercles de la monture peuvent également être utilisés, par exemple conjointement aux paramètres de centrage afin de minimiser l'épaisseur du verre notamment pour les verres à correction positive pour un porteur hypermétrope. Dans ce cas la description de la forme de la monture devra être suffisamment précise pour savoir quelle est l'épaisseur minimale au bord du verre que l'on puisse avoir une fois le verre taillé pour le montage dans les cercles de la monture.

Lors de la prise des images, la monture est de préférence portée par un sujet. De plus, les images sont de préférence prises simultanément.

Le procédé de détection peut être mis en œuvre par tout équipement 1 adapté.

Par exemple, un équipement 1 pouvant être utilisé comprend une colonne 2 comportant au moins deux dispositifs de prise de vue 2, 3, 4 configurés pour prendre les images. Les dispositifs de prise de vue 2, 3, 4 peuvent notamment comprendre une caméra vidéo, une caméra infrarouge, un appareil photographique numérique, un scanner ou tout autre moyen.

Dans un mode de réalisation, l'équipement 1 comprend deux dispositifs de prise de vue 4, 5 positionnés de part et d'autre de la colonne 2 de sorte que leur axe de visée forme un angle non nul avec un plan de symétrie de la colonne 2. Le sujet étant ensuite positionné face à la colonne 2, les deux dispositifs de prise de vue 4, 5 se situent donc de part et d'autre de la monture, lors de la prise de la première et de la deuxième image.

Par exemple, les dispositifs de prise de vue 4, 5 peuvent former un angle de + 10° et -10° par rapport à ce plan de symétrie.

Dans une variante de réalisation, l'équipement 1 comprend en outre un troisième dispositif de prise de vue 3, placé de manière centrale dans la colonne 2 - c'est-à-dire dans le plan de symétrie de la colonne 2 - de sorte à prendre des images de face de la monture. Le troisième dispositif de prise de vue 3 peut par exemple être logé dans la colonne 2 et masqué par un miroir sans tain de manière à ce que le sujet porteur de lunette puisse se regarder dans le miroir lors d'une prise de mesure (pour la vision de loin par exemple), sans que la caméra ne gêne son comportement et affecte la mesure.

De manière connue en soi, les repères visuels peuvent comprendre des points singuliers du visage et/ou des cibles fixées sur un accessoire 7 solidaire de la monture.

Par exemple, au moment de la prise de la première et de la deuxième image, un accessoire du type clip peut être placé sur la monture. Dans l'exemple de réalisation illustré sur les figures, l'accessoire comprend par exemple un support longiligne horizontal configuré pour être posé sur la bordure supérieure de la monture, une tige qui s'étend verticalement depuis le support et une partie en saille qui s'étend horizontalement, perpendiculairement au support et à la tige.

Il comprend au moins trois cibles, par exemple quatre cibles : une cible fixée au niveau de chacune des extrémités droite et gauche du support, une cible centrale fixée sur la tige et une cible avant fixée au bout de la partie en saillie. Le cas échéant, l'accessoire peut en outre comprendre deux tiges courbes flexibles configurées pour prendre appui sur la bordure inférieure de la monture, les tiges pouvant être équipées chacune au niveau de leur extrémité libre d'une cible supplémentaire.

Les cibles peuvent comprendre un marqueur coloré dont la couleur présente un spectre bien défini (par exemple vert vif) et/ou des formes géométriques (par exemple un damier noir et blanc ou rouge et vert). L'accessoire peut en outre comprendre des pinces configurées pour accrocher le support sur la monture de manière stable.

L'identification des cibles dans les images permet ainsi, connaissant la position relative des cibles sur l'accessoire, de définir un repère de référence. Ce repère de référence comprend alors un premier axe X sensiblement parallèle à une bordure supérieure de la monture correspondant à l'axe reliant les cibles positionnées au niveau des extrémités droite et gauche du support, un deuxième axe Z normal à l'axe X et parallèle à la partie en saillie, et un troisième axe Y normal à l'axe X et à l'axe Z. Les trois axes se croisent au centre de l'accessoire, au niveau de la jonction de la tige et de la partie en saillie, qui correspond donc à l'origine du repère.

Bien entendu, tout autre repère de référence peut être défini, soit à partir de l'identification de cibles dans les images, soit à partir d'autres points de référence. Ainsi, comme nous l'avons vu plus haut, l'invention s'applique également dans le cas où les repères visuels comprennent des points singuliers du visage, en lieu et place de l'accessoire équipé de cibles visuelles. Dans ce cas, le repère de référence peut être défini par exemple en déterminant l'axe du regard du sujet, par exemple à partir du milieu du segment formé par les deux centres de rotation des yeux du sujet et de la cible fixée du regard par le sujet. Le repère de référence peut alors comprendre un premier axe passant par le centre de rotation des yeux, un deuxième axe étant l'axe du regard comme défini passant par le milieu du segment reliant les centres de rotation des yeux et définissant l'origine du repère, et un troisième axe correspondant à l'attraction terrestre et passant par l'origine. Le cas échéant, le repère peut ensuite être orthonormé. Dans un deuxième exemple, le repère de référence peut comprendre un premier axe passant par le centre de rotation des yeux, un deuxième axe correspondant à l'attraction terrestre et passant par le milieu du segment reliant les centres de rotation des yeux et un troisième axe normal au premier et au deuxième axe et passant par l'origine.

Dans ce qui suit, afin uniquement de simplifier la description, le repère de référence comprend les axes X, Y, Z et le centre O décrits plus haut.

L'équipement 1 comprend en outre une unité de traitement 6 comprenant des moyens de traitement, par exemple un ordinateur ou un serveur disposant de moyens de traitement, adapté pour exécuter le procédé qui sera décrit plus en détails ci-après. Les moyens de traitement peuvent par exemple comprendre un calculateur de type processeur, microprocesseur, microcontrôleur, etc., L'équipement 1 comprend également des moyens de commande (écran tactile, clavier, souris, boutons, etc.).

Le procédé de détection automatique comprend alors les sous-étapes suivantes :
- S1 : prise d'une première image de la monture suivant un premier angle de vue,
- S2 : prise d'une deuxième image de la monture suivant un deuxième angle de vue, le premier angle de vue étant différent du deuxième angle de vue,
- S3 : identification, dans la première image et dans la deuxième image, de repères visuels et déduction, pour chaque image, d'un repère de référence lié à ces repères visuels, le repère de référence comprenant trois axes,
- S4 : détermination d'un élément de la monture,
- S5 : définition d'un modèle initial de la monture dans le repère de référence à partir d'un ensemble de paramètres initiaux prédéfinis,
- S6 : définition d'une région d'intérêt 9 englobant l'élément de la monture dans le modèle initial,
- S7 : projection, dans la première image et dans la deuxième image, de la région d'intérêt 9,
- S8 : comparaison des projections de la région d'intérêt 9 dans la première image et dans la deuxième image et évaluation d'une similarité entre lesdites projections,
- S9 : modification d'au moins un des paramètres du modèle défini à l'étape S5,
- S10 : réitération des étapes S6 à S9 jusqu'à obtention d'un maximum de similarités entre les projections de la région d'intérêt 9 dans la première image et dans la deuxième image,
- S11 : déduction de l'au moins un des paramètres du modèle associé aux projections présentant le maximum de similarités.

Par « projection », on comprendra ici la mise en correspondance entre des points de la région d'intérêt avec des points de l'image.

Dans une première forme de réalisation, le modèle initial comprend les deux rectangles englobants et leur position dans le repère de références, dont les paramètres initiaux sont fixés en fonction de valeurs moyennes prédéfinies. Plus précisément, chaque rectangle englobant comprend deux segments verticaux, correspondant au segment nasal et au segment temporal d'un des cercles de la monture, et deux segments horizontaux, correspondant respectivement à la bordure supérieure et à la bordure inférieure de la monture. La définition des paramètres initiaux peut comprendre les cotes A, B et D, le galbe et/ou la position de la monture dans le repère de référence. Ces paramètres sont équivalents à positionner les segments nasaux, temporaux, supérieurs et inférieurs dans le repère de référence. La base monture et/ou la base du verre peuvent être estimés ou mesurés pour améliorer le modèle de la monture. En effet, la monture étant courbée, les cercles de la monture ne sont pas sur un plan. Il en résulte que les segments horizontaux ne sont pas sur le même plan que les segments verticaux. Ne pas tenir compte de ce décalage peut induire des erreurs lorsque la prise vue des caméras ne correspond pas à la projection convenue sur les plans des rectangles englobants. La prise en compte de la base monture et/ou la base du verre permet donc de mieux positionner les segments du rectangle englobant.

On notera que, selon les applications, il est possible que la définition de lignes plutôt que de segments (lignes nasales, temporales, supérieure ou inférieure) suffise. Par exemple pour obtenir les paramètres de centrage (demi-écarts et hauteurs pupillaires) seuls la ligne inférieure horizontale et le milieu des segments temporaux (autrement dit sensiblement la position de la monture sur l'axe X du repère de référence) peuvent suffire.

En variante, le modèle initial peut être défini à partir des cotes (A B et D) de la monture, lorsque ceux-ci sont connus et fournis par exemple par le fabricant.

Puis, au cours d'une première étape, un premier paramètre du modèle de la monture peut être déterminé à partir des première et deuxième images acquises par les dispositifs de prise de vue 3, 4, 5 lors des étapes S1 et S2.

Dans une forme de réalisation, la première image et la deuxième image sont acquises par les premier et deuxième dispositifs de prise de vue 3, 4, 5 qui sont situés de part et d'autre de la colonne 2, en formant un angle non nul avec son plan de symétrie. Une telle configuration des dispositifs de prise de vue 3, 4, 5 permet en effet de réduire les différences de perspective observées entre les images prises par les deux dispositifs. Par exemple, l'axe de visée des deux dispositifs de prise de vue 3, 4, 5 peut former un angle de 10° avec le plan de symétrie de la colonne 2.

En variante, la première image peut être acquise à l'aide du troisième dispositif de prise de vue 3, qui est compris dans le plan de symétrie de la colonne 2, tandis que la deuxième image est acquise à l'aide de l'un des deux autres dispositifs de prise de vue 4, 5.

Au cours de l'étape S7, la région d'intérêt 9 est projetée dans la première image et dans la deuxième image.

Le sujet portant, sur la monture, un accessoire équipé des cibles, la première et la deuxième image reproduisent ces cibles. Connaissant la distance et la position respective de chaque cible sur le clip, est donc possible de déterminer dans chacune des images la position et l'orientation de l'accessoire et d'en déduire la position et l'orientation du repère de référence. Les coordonnées de la région d'intérêt 9 étant déterminées dans le repère de référence grâce au modèle initial, il est donc possible d'en effectuer la projection dans le plan de la première et de la deuxième image.

Optionnellement, une étape dite de correction de la perspective des projections dans la première et dans la deuxième image peut être implémentée afin de faciliter la recherche de similarité maximale lors de l'étape S8 entre lesdites projections. En particulier, les paramètres extrinsèques et intrinsèques des caméras étant connus, la position sur chaque image de chaque point de la région d'intérêt 9 est également connue. Il est donc possible de transformer la projection de chaque point sur la première et la deuxième image de manière à ce que les distances relatives de la région d'intérêt 9 soient conservées entre chaque projection. Par commodité, nous appellerons correction de perspective une telle transformation. Une telle transformation permet de faire des comparaisons lors de l'étape S8 en prenant en compte le voisinage de chaque point de la zone d'intérêt (par exemple des calculs de gradient, des extractions de contours ou des cartes de distance au plus proche contour) en s'affranchissant des déformations liées au point de vue de la caméra. Dans le cas où la région d'intérêt 9 est un rectangle, une transformation possible pour réaliser cette correction de perspective est de projeter à nouveau les projections sur la première et la deuxième image sur un rectangle de la même dimension que la région d'intérêt 9. Si les images obtenues par les caméras ne présentent pas de distorsions sensibles (ou si celles-ci ont été corrigées), il s'agit alors d'une simple transformation affine transformant le trapèze perçu sur chaque image représentant la région d'intérêt 9 en un rectangle aux proportions de la région d'intérêt 9. Les deux reprojections à comparer sont alors deux images rectangulaires aux dimensions de la région d'intérêt 9. Tout point de la région d'intérêt 9 diffusant de la lumière visible par les caméras aura la même intensité lumineuse et sera à la même position sur ces deux images rectangulaires que sur la région d'intérêt 9. Il en résulte que si la surface de la monture diffuse la lumière et est bien présente sur la région d'intérêt 9, les deux images rectangulaires ainsi corrigées auront une très faible différence et donc une similarité maximale lors de l'étape S8.

Optionnellement il est possible lors de la projection de la région d'intérêt 9 sur chaque image, de noter pour chaque point de la région d'intérêt 9 l'information lumineuse du point projeté sur chaque image. La comparaison de l'étape S8 revient donc à comparer les informations notées directement dans l'espace 3D de la région d'intérêt 9. Cette approche est plus générale et s'applique à des régions d'intérêt de formes variées mais peut demander plus de calculs que les projections présentées plus haut.

Optionnellement, préalablement au calcul de similarité, les images de gradients peuvent être transformées en carte de distance (opération classique dite distance transform) de manière à faciliter l'optimisation des paramètres du modèle. En effet, grâce à la carte de distance le critère de similarité va progressivement augmenter lorsque le paramètre de monture s'améliore, ce qui permet de savoir comment modifier ce paramètre.

Lors de l'étape S8, les projections de la région d'intérêt 9 dans la première image et dans la deuxième image sont alors comparées de sorte à évaluer leur similarité.

L'étape S8 de comparaison peut notamment être réalisée par comparaison des gradients dans chacune des projections. Pour cela, dans un exemple de réalisation pour trouver la position de la monture sur l'axe X ou l'axe Z du repère de référence ou le galbe de la monture, les gradients verticaux sont calculés à l'aide d'un filtre de Sobel, puis les deux images résultant de ces filtres peuvent être comparés par exemple en faisant la somme des carrés des différences point à point, ou encore en calculant la corrélation en faisant le produit point à point. D'autres méthodes permettant d'évaluer la similarité des images peuvent être utilisées telles que des calculs de détections de contours et cartes de distance sur chaque image.

Lorsque la similarité des projections a été estimée au cours de l'étape S8, au moins un des paramètres du modèle défini à l'étape S5 est modifié, puis les étapes S6 à S9 sont réitérées jusqu'à ce que les projections de la région d'intérêt 9 dans la première et dans la deuxième image présentent un maximum de similarité.

On notera que, lorsque la similarité des projections est faible, cela signifie que le l'élément de la monture sélectionné à l'étape S4 ne se trouve pas dans la position qui a été supposée dans le modèle, puisque l'angle de vue est différent. C'est pourquoi au moins un des paramètres du modèle est modifié, jusqu'à ce que les projections soient similaires.

En revanche, lorsque la similarité des projections est maximale, cela implique que l'élément de la monture se trouve bien dans la position supposée par le modèle. Le ou les paramètres du modèle qui ont été choisis pour effectuer ces projections correspondent alors aux paramètres réels de la monture.

Au cours d'étapes supplémentaires, tout ou partie des autres paramètres du modèle peuvent alors être optimisées, en réitérant les étapes S5 à S6 et en modifiant successivement les différents paramètres, jusqu'à ce que l'ensemble des paramètres nécessaires à l'opérateur soient optimisés. Par exemple, lorsque l'opérateur cherche uniquement à déterminer l'écart pupillaire (ou les demi-écarts pupillaires) et les hauteurs de centrage, ce dernier a uniquement besoin de déterminer (i) la position de la monture suivant un axe normal au plan sagittal de la tête du sujet et (ii) la position de la ligne inférieure du rectangle englobant. Il n'est donc pas nécessaire d'optimiser les autres paramètres du modèle.

Par plan sagittal de la tête du sujet, on comprendra ici le plan fictif séparant la moitié gauche de la moitié droite de la tête du sujet. De plus, par plan coronal, on comprendra le plan fictif perpendiculaire au plan sagittal et qui sépare le visage du sujet en une partie antérieure et une partie postérieure.

Dans ce qui suit, l'invention va plus particulièrement être décrite dans le cas où l'élément de la monture comprend le pontet de la monture (c'est-à-dire la partie nasale de la monture reliant ses deux cercles). Ceci n'est cependant pas limitatif, l'élément de la monture pouvant comprendre toute autre partie de la monture, dont notamment un tenon, un segment nasal, une bordure supérieure, etc.

Le modèle initial est tout d'abord positionné dans le repère de référence de manière symétrique par rapport à l'origine du repère et en alignant les segments supérieurs des rectangles englobants parallèlement avec l'axe X.

La région d'intérêt 9 est une surface tridimensionnelle définie à partir du modèle de sorte que sa projection dans la première et dans la deuxième image englobe le pontet de la monture. En pratique, afin de garantir que chaque projection englobe bien le pontet de la monture, malgré le fait que les paramètres initiaux ne soient pas encore ajustés aux paramètres réels de la monture, la région d'intérêt 9 est définie de sorte à être plus grande que la cote D prédéfinie dans le modèle, tout en restant suffisamment petite pour ne pas englober trop d'éléments étrangers (coin de l'œil, cils, etc.) dans les images.

Par exemple, la région d'intérêt 9 peut être une surface de forme globalement rectangulaire et être placée de façon symétrique par rapport à l'axe Y du repère de référence. Par hypothèse, l'accessoire devant être posé par l'opérateur sur la monture de manière centrée par rapport à la monture, et donc par rapport au pontet, les projections de la région d'intérêt 9 dans la première image et dans la deuxième image devraient également être centrées par rapport à la monture si les paramètres du modèle correspondaient aux paramètres réels de la monture. Cette hypothèse permet ainsi de limiter la taille de la région d'intérêt 9.

On notera que, l'accessoire étant par définition en appui sur la bordure supérieure de la monture et, si possible, sur sa bordure inférieure (grâce aux tiges courbes qui sont optionnelles), il est possible de déterminer aisément certains paramètres directement à partir de la détermination de la position dans l'espace de l'accessoire. Ces paramètres comprennent :
- l'angle pantoscopique, qui correspond la mesure de l'inclinaison du plan moyen de la lentille correctrice autour de l'axe X, par rapport à la verticale. Il s'agit d'un angle orienté qui reflète le fait que le sujet a tendance à avoir le visage plus ou moins relevé ou abaissé lorsqu'il regarde un objet placé droit devant lui.
- l'angle de cap, qui correspond à la mesure de l'angle de rotation autour de l'axe Y du plan formé par les deux segments naseaux. Un cap de zéro degrés peut être défini par exemple lorsque l'axe du regard est orthogonal à ce plan. Le cap est un angle orienté qui reflète le fait que le sujet a tendance à avoir le visage plus ou moins tourné à gauche ou à droite lorsqu'il regarde un objet placé droit devant lui. Il est possible de considérer que l'angle de cap de la monture est identique à celui de l'accessoire. Le cas échéant, la valeur de l'angle de cap pourra être ajustée après avoir déterminé la position de la monture suivant l'axe X et la valeur du galbe de la monture.
- l'assiette, qui correspond à la mesure de l'inclinaison du plan moyen de la lentille correctrice autour de l'axe Z. Tout comme pour l'angle de cap, il est possible de considérer que l'assiette de la monture est identique à celle de l'accessoire. Le cas échéant, la valeur de l'assiette pourra être ajustée après avoir déterminé la position des segments verticaux des rectangles englobants, en optimisant la correspondance droite-gauche.
- la position de la monture suivant l'axe Y. Cette position est en effet contrainte par les points d'appui de l'accessoire sur la monture. Il ne reste donc qu'à ajuster ce paramètre en fonction de l'épaisseur de la monture afin de déterminer la position précise des segments horizontaux supérieurs des rectangles englobants.

Les variables restant à déterminer sont donc la position suivant les axes X et Z du pontet (et plus particulièrement son centre) dans le repère de référence. Puis, connaissant cette position, il sera alors possible de déterminer tout ou partie des paramètres définissant le rectangle englobant de la monture.

Pour cela, la Demanderesse s'est aperçue du fait qu'il était préférable de déterminer les paramètres restants les uns après les autres en fixant les autres paramètres et en exploitant la symétrie de la monture.

Par ailleurs, l'ordre dans lequel les paramètres sont déterminés permet de simplifier l'algorithme de détermination des différents paramètres de la monture et du sujet. De préférence, lorsque le repère de référence est défini à partir de repères visuels portés par un accessoire, l'algorithme est simplifié lorsque les coordonnées selon les axes X et Z sont d'abord établis. La détermination du galbe, des segments nasaux et temporaux ou encore des coordonnées suivant l'axe Y peuvent ensuite être déterminés plus facilement.

Toutefois, comme nous l'avons vu plus haut, tout autre repère de référence peut être utilisé. Dans ce cas, les paramètres sont de préférence modifiés de sorte à déterminer les coordonnées, dans ce repère, du centre du pontet suivant l'axe normal à un plan sagittal et suivant l'axe normal à un plan coronal, puis, une fois ces paramètres fixés dans le modèle, les autres paramètres peuvent être déterminés. Pour cela, le ou les paramètres du modèle modifiés à l'étape S9 correspondent à une translation dans le repère de référence du modèle défini à l'étape S5 suivant un axe sensiblement normal à un plan sagittal d'une tête du sujet ou suivant un axe sensiblement normal à un plan coronal de la tête dudit sujet.

Ainsi, dans le cas du repère de référence décrit plus haut (défini par les axes X, Y, Z et l'origine O à partir de la position des cibles de l'accessoire), l'au moins un paramètre qui peut être optimisé en premier lieu au cours de l'étape S5 correspond à la coordonnée suivant l'axe X ou l'axe Z, dans le repère de référence, du modèle de la monture. Cette modification a pour conséquence de modifier la position, suivant cet axe, de la région d'intérêt 9, puisque celle-ci est définie en fonction des paramètres du modèle.

Optionnellement, afin de faciliter l'étape S8 de comparaison, préalablement à cette étape, l'une des projections de la région d'intérêt 9, par exemple la projection dans la deuxième image, est transformée par application d'une symétrie axiale par rapport à un plan normal à l'axe X et passant par le centre de l'image de sorte à obtenir une projection miroir. C'est alors cette projection miroir qui est comparée avec la projection de la région d'intérêt 9 dans la première image. Cette transformation permet en effet d'augmenter les similarités entre les projections, en tenant compte de la symétrie de la monture et l'angle de vue symétrique des dispositifs de prise de vue 3, 4, 5.

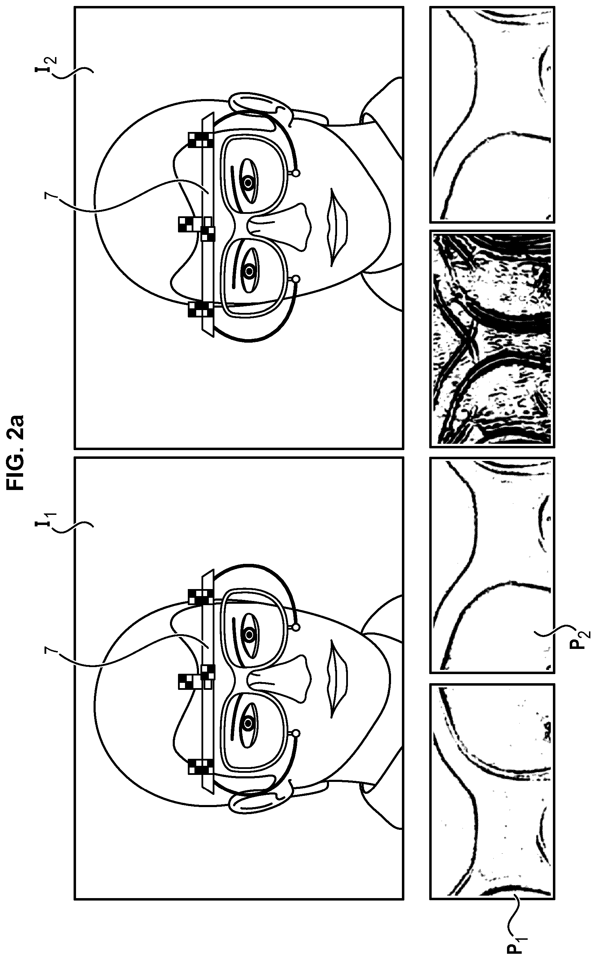

Par exemple, on a représenté sur la figure 2a la projection d'un exemple de région d'intérêt 9 dans une première image I1 et la projection miroir correspondant à la transformation de la projection de ladite région d'intérêt 9 dans une deuxième image I2. Ici, les images I1, I2 ont été prises avec des dispositifs 4, 5 placés de manière symétrique par rapport au plan de symétrie de la colonne 2 de sorte que leur angle de visée forme un angle de +10° ou -10° par rapport à ce plan. Les coordonnées du centre de la région d'intérêt 9 définie à partir du modèle initial dans le repère de référence sont égales à (-6.013 ; -0.557 ; 5.878) mm. Comme cela est visible sur les figures 2a, ces deux projections P1, P2 sont désalignées. Ceci ressort par ailleurs de leur comparaison, qui a été réalisée ici à l'aide d'un filtre de Sobel puis en réalisant la somme des carrés des différences point à point normalisée et qui donne une différence égale à 0.655. Or, lorsque ce mode de comparaison est appliqué, plus la différence est proche de 1, moins les images sont similaires.

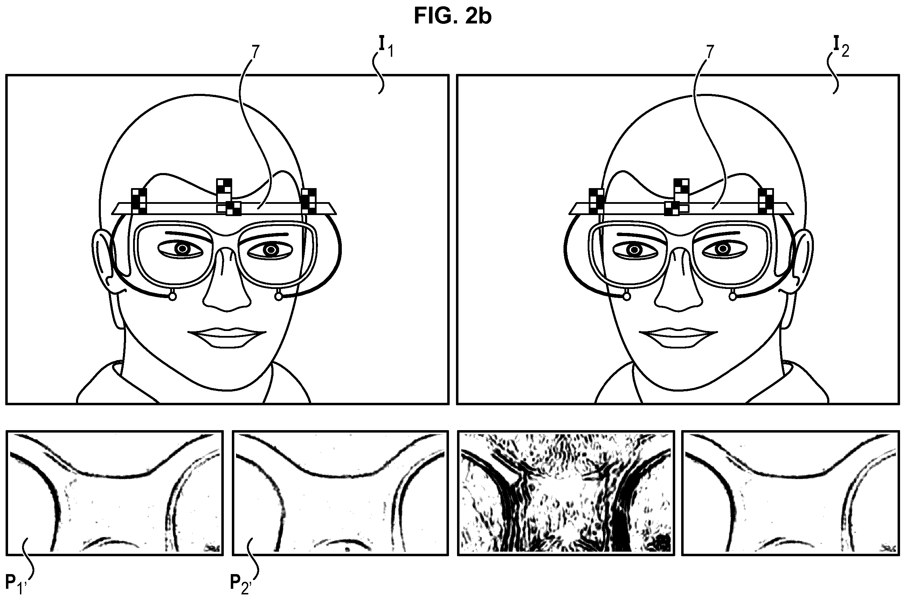

On a par ailleurs représenté sur la figure 2b la projection P1' de cette même région d'intérêt 9 dans la première image I1 et sa projection miroir P2' associée à la deuxième image I2, après décalage du modèle de 6.431 mm selon l'axe X, de sorte que les coordonnées du centre de la région d'intérêt 9 suivant les axes X, Y et Z sont à présent égales à (0.418 ; -0.557 ; 5.878) mm. Comme cela ressort de leur comparaison, qui donne une différence de 0.175, ces deux projections P1', P2' sont très similaires. On en déduit que ce paramètre (coordonnée selon l'axe X du centre de la région d'intérêt 9, qui correspond au centre du pontet de la monture) est très proche de la coordonnée réelle du centre du pontet dans la première image I1 et dans la deuxième image I2. La coordonnée selon l'axe X du centre du pontet est donc sensiblement égale à 0.418 mm.

Les étapes S5 à S9 peuvent ensuite être réitérées de sorte à déterminée la coordonnée selon l'axe Z du centre du pontet, en modifiant cette fois la coordonnée suivant cet axe du modèle de la monture, jusqu'à l'obtention des projections de la région d'intérêt 9 dont les similarités sont maximales.

On comprendra toutefois que, dans le cas de l'optimisation de la coordonnée suivant l'axe Z, ce sont les projections non transformées de la région d'intérêt 9 qui sont comparées, la monture n'était pas symétrique par rapport à un plan qui est normal à l'axe Z.

La cote D du modèle peut également être optimisée. Pour cela, la position des segments nasaux (ou des lignes nasales) des rectangles englobants du modèle est optimisée en utilisant pour l'évaluation de la similarité de l'étape S8, la détection des contours verticaux de la monture au niveau de son pontet dans la première dans la deuxième image.

On notera que, pour identifier précisément la position des contours verticaux de la monture, il est préférable que les projections de la région d'intérêt 9 dans la première et dans la deuxième image soient très similaires. C'est pourquoi le paramètre de la cote D est de préférence optimisé dans le modèle après la détermination des coordonnées en X et en Z du centre du pontet de la monture. En revanche, le galbe n'étant pas nécessaire pour l'obtention de ce paramètre, il peut être déterminé avant ou après la cote D (ou, en variante, ne pas être déterminé si l'opérateur n'en a pas besoin). Il est a noté toutefois que la cote D donnant la position des lignes contenant les segments nasaux des rectangles englobants des lentilles, ces lignes peuvent être utilisées avantageusement comme axe de rotation pour déterminer le galbe par la suite.

Afin de déterminer la cote D, il est nécessaire d'optimiser la position des lignes nasales des rectangles englobants des lentilles. Pour cela, le procédé comprend une étape de détection du contour vertical interne de la monture dans les projections, dans la première image et dans la deuxième image, de la région d'intérêt 9 correspondant au pontet en partant du modèle dont les coordonnées suivant l'axe X et l'axe Z ont été optimisées préalablement.

Dans une forme de réalisation, afin de simplifier la détection des contours des bordures verticales de la monture, la symétrie de la monture peut avantageusement être utilisée en détectant la bordure interne droite de la monture dans l'image, parmi la première et la deuxième image, qui a été prise par le dispositif le plus proche du tenon gauche de la monture, et en détectant la bordure interne gauche de la monture dans l'image, parmi la première et la deuxième image, qui a été prise par le dispositif le plus proche du tenon droit de la monture. Par exemple, lorsque la première image et la deuxième image ont été prises par les dispositifs de prise de vue 3, 4, 5 formant un angle non nul avec le plan de symétrie, la bordure interne droite de la monture peut être détectée dans la première image, qui a été prise par le dispositif de prise de vue 5 à gauche de la colonne 2, et la bordure interne gauche de la monture peut être détectée dans la deuxième image, qui a été prise par le dispositif de prise de vue à droite 4 de la colonne 2.

En effet, la bordure interne droite est plus franche dans l'image prise depuis le côté gauche, puisque ni le drageoir, ni le support nasal ne sont visibles, alors que dans cette image, la bordure interne gauche est plus difficile à discerner en raison de la présence de divers éléments étrangers. Pour les mêmes raisons, la bordure interne gauche est plus franche sur l'image prise depuis le côté droit. Par ailleurs, les coordonnées suivant les axes X et Z du modèle ayant été optimisées, les projections de la région d'intérêt 9 correspondant au pontet dans le modèle sont très similaires, ce qui permet de rechercher l'un des segments nasaux par détermination de contours verticaux dans la première image et l'autre des segments nasaux par détection de contours verticaux dans la deuxième image.

Les techniques de détection de contour étant conventionnelles, elles ne seront pas davantage décrites ici. Il est par exemple possible d'utiliser un filtre de Canny et de sélectionner les éléments de contours sensiblement verticaux.

Comme la position de la monture suivant l'axe X est déjà connue, on peut ne détecter qu'un segment nasal, l'autre segment nasal pouvant être utilisé comme confirmation, ou bien utiliser le coté dont les contours sont les plus marqués pour positionner le segment.

Une fois le contour vertical interne droit ou gauche de la monture détectés, il est alors possible d'en déduire la position, dans le repère de référence, des segments nasaux (ou, le cas échéant, des lignes nasales) délimitant intérieurement les deux rectangles englobants des lentilles et d'en déduire la distance la plus courte entre ces deux segments. Cette distance correspond alors à la cote D.

De la même manière que pour le paramètre déterminant la position de la monture selon l'axe Z préalablement déterminé avant le galbe, les étapes S5 à S9 peuvent ensuite être réitérées de sorte à déterminer le galbe de la monture, en modifiant cette fois dans le modèle l'angle entre les rectangles englobants et le plan tangent aux segments nasaux des rectangles englobants du modèle de la monture, c'est-à-dire les segments des rectangles englobants situés à proximité du pontet.

Tout comme pour l'optimisation de la coordonnée suivant l'axe Z du centre de la monture, ce sont les projections non transformées par symétrie axiale (effet miroir) de la région d'intérêt 9 qui sont comparées pour la détermination du galbe.

Afin d'optimiser la mesure du galbe, les étapes S1 à S11 peuvent être appliquées en utilisant l'un des tenons (droite ou gauche) comme élément de la monture, en lieu et place du pontet. En effet, la mesure de l'angle de galbe est plus précise dans cette partie de la monture qu'au niveau du pontet.

De plus, le galbe peut être optimisé à partir d'images qui peuvent être différentes de celles utilisées pour l'optimisation des coordonnées suivant les axes X et Z du centre du pontet, afin de réduire les différences de perspective entre les images. Pour cela, l'une des images (image de côté) peut être prise à l'aide de l'un des dispositifs de prise de vue 4, 5 dont l'axe de visée forme un angle avec le plan de symétrie de la colonne 2 tandis que l'autre image (image de face) est prise par un dispositif de prise de vue placé de sorte que son axe de visée soit compris dans ce plan. Il en découle que l'image de côté peut être choisie parmi la première ou à la deuxième image tandis que l'image de face peut être prise par le troisième dispositif de prise de vue 3 décrit plus haut. De préférence, les deux images sont prises simultanément.

De plus, toujours pour optimiser la détermination du galbe, le choix de l'image de côté parmi la première et la deuxième image est déterminé en fonction du tenon utilisé comme élément de la monture dans l'algorithme de détermination du galbe. Par exemple, lorsque l'élément de la monture est le tenon gauche, le dispositif de prise de vue 5 utilisé pour prendre l'image de côté est celui qui est le plus proche de ce tenon gauche, c'est-à-dire celui qui est situé à gauche du plan de symétrie. En effet, sur l'image prise par ce dispositif, la bordure gauche de la monture est plus facile à détecter car plus franche dans la mesure où la limite gauche du visage du sujet (ou encore ses cheveux ou l'environnement derrière le sujet) n'est pas visible sur cette image et que le drageoir est peu ou pas visible. Or, ces éléments rendent la détection du contour ambigu. Inversement, si l'élément de la monture qui est choisi pour la mise en œuvre de l'algorithme est le tenon droit, le dispositif de prise de vue 4 utilisé pour prendre l'image de côté est celui qui est le plus proche de ce tenon droit.

Optionnellement, une étape de correction de la perspective dans la troisième et la quatrième image peut être implémentée. Cette étape est particulièrement avantageuse pour le paramètre de galbe lorsque le galbe est important car dans ce cas le plan du rectangle englobant est très incliné par rapport au plan image, les effets de perspective y sont donc très prononcés.

Les étapes S1 à S11 du procédé peuvent alors être implémentées en vue d'optimiser le galbe du modèle de monture conformément aux sous-étapes suivantes :
- S1 : prise de l'image de côté,
- S2 : prise de l'image de face, de préférence simultanément à l'étape S1,
- S3 : identification, dans l'image de côté et dans l'image de face des repères visuels et déduction, pour chaque image, du repère de référence lié à ces repères visuels
- S4 : détermination de l'élément de la monture, par exemple le tenon gauche lorsque l'image de côté a été prise par le dispositif de prise de vues 5 situé à gauche du plan de symétrie,
- S5 : définition du modèle de la monture dans le repère de référence à partir d'un ensemble de paramètres initiaux prédéfinis, les coordonnées suivant les axes X et Z correspondant aux coordonnées précédemment obtenues lors des itérations précédentes du procédé.
- S6 : détermination des coordonnées d'une région d'intérêt 9 dans le repère de référence, ladite région d'intérêt 9 englobant l'élément de la monture dans le modèle défini à l'étape S5,
- S7 : projection, dans l'image de côté et dans l'image de face, de la région d'intérêt 9,
- S8 : comparaison des projections de la région d'intérêt 9 dans l'image de côté et dans l'image de face et évaluation d'une similarité entre lesdites projections,
- S9 : modification de l'angle entre les rectangles englobants et le plan tangent dans le modèle défini à l'étape S5,
- S10 : réitération des étapes S6 à S9 jusqu'à obtention d'un maximum de similarités entre les projections de la région d'intérêt 9 dans l'image de côté dans l'image de face,
- S11 : déduction du galbe de la monture, ledit galbe correspondant à l'angle entre les rectangles englobants et le plant tangent dans le modèle correspondant à la région d'intérêt 9 dont les projections présentent le maximum de similarités.

La cote A du modèle peut également être optimisé. Pour cela, la position des segments temporaux des rectangles englobants du modèle est optimisée par détection des contours verticaux de la monture au niveau de ses tenons.

De manière analogue à ce qui a été décrit pour l'optimisation des segments nasaux, il est préférable que les projections de la région d'intérêt 9 dans les images soient très similaires. C'est pourquoi le paramètre de la cote A est de préférence optimisé dans le modèle après la détermination des coordonnées en X et en Z du centre du pontet de la monture. En revanche, la cote A et le galbe n'étant pas nécessaire pour l'obtention de certains paramètres de centrage ou de personnalisation, ils peuvent ne pas être déterminés si l'opérateur n'en a pas besoin.

Afin de déterminer la cote A, il est nécessaire d'optimiser la position dans le modèle des segments temporaux des rectangles englobants des lentilles. Pour cela, le procédé comprend une étape de détection du contour vertical externe de la lentille dans les projections, dans deux images prises avec un angle de vue différent, de la région d'intérêt 9 correspondant au tenon droit puis au tenon gauche en partant du modèle dont les coordonnées suivant l'axe X et l'axe Z (et, le cas échéant, le galbe) ont été optimisées préalablement.

Tout comme pour le galbe, la détection des contours de la monture au niveau des tenons peut être optimisée à partir d'images qui peuvent être différentes de celles utilisées pour l'optimisation des coordonnées suivant les axes X et Z du centre du pontet, afin de réduire les différences de perspective entre les images. Pour cela, la détection des contours peut être effectuée dans la projection de la région d'intérêt 9 dans l'image de face et dans l'image de côté (qui peut correspondre à la première image ou à la deuxième image).

De plus, toujours pour optimiser la détection des contours, le choix de l'image de côté parmi la première et la deuxième image est déterminé en fonction du tenon (droit ou gauche) englobé dans la région d'intérêt 9. Par exemple, lorsque la région d'intérêt 9 englobe le tenon gauche, c'est l'image prise par le dispositif de prise de vues 5 qui est le plus proche de ce tenon gauche, c'est-à-dire celui qui est situé à gauche du plan de symétrie, qui est utilisée. Inversement, lorsque la région d'intérêt 9 englobe le tenon droit, c'est l'autre image qui est utilisée.

En variante, la détection des contours peut bien entendu être réalisée à l'aide de la première image et de la deuxième image, qui sont toutes les deux des images de côté. La détection est simplement plus complexe en raison de la plus grande différence de perspective entre les deux images.

Le procédé comprend alors une étape de détection du contour vertical externe (au niveau des tenons) de la lentille dans les projections dans deux images de la région d'intérêt 9 correspondant au tenon droit puis au tenon gauche (ou inversement), lesdites images étant prises avec un angle de vue différent.

Une fois les contours verticaux externes droit et gauche détectés dans les images, il est alors possible d'optimiser la position, dans le repère de référence, des segments temporaux (ou, le cas échéant, des lignes temporales) délimitant extérieurement les deux rectangles englobants des lentilles. La cote A correspond alors à la distance entre le segment nasal et le segment temporal d'un rectangle englobant.

La cote B du modèle peut également être optimisée.

Pour cela, au cours d'une étape préliminaire, la coordonnée suivant l'axe Y dans le repère de référence du modèle de la monture peut être optimisée.

Cette optimisation pourra être réalisée suivant l'une des méthodes de détection de contours décrites plus haut. L'épaisseur de la monture pourra également être prise en compte afin de mieux localiser le contour recherché.

Une fois la coordonnée du modèle suivant l'axe Y optimisée, la cote B du modèle peut être optimisée par détection du contour horizontal supérieur et inférieur de la monture, au niveau d'une des lentilles correctrices de la monture, par exemple la lentille droite. Cette détection des contours horizontal et vertical peut être réalisée dans l'une des images (par exemple la première image, la deuxième image ou encore l'image de face). Une fois ces contours horizontaux détectés, il est alors possible d'optimiser la position, dans le repère de référence, du segment supérieur et du segment inférieur du rectangle englobant de la lentille correctrice (dans cet exemple, la lentille droite) sur laquelle les contours ont été détectés, et d'en déduire la distance la plus courte entre ces deux segments. La cote B correspond alors à cette distance.

Le cas échéant, la symétrie de la monture peut être exploitée afin de confirmer la mesure de la cote B, en réitérant la détection des contours sur les contours horizontaux supérieur et inférieur de l'autre lentille correctrice (dans cet exemple, la lentille gauche). Si la distance entre le segment supérieur et le segment inférieur obtenue lors de la détection réalisée au niveau de la lentille gauche est différente de celle obtenue pour la lentille droite, cela signifie que l'un au moins des paramètres du modèle n'est pas optimal et doit être modifié. Ce paramètre est alors à nouveau optimisé, suivant les étapes décrites ci-avant.

L'ensemble des paramètres (cotes A, B, D, galbe et position de la monture dans le repère de référence) du modèle de monture déterminant les rectangles englobants sont à présent optimisés.

A partir de ces paramètres, il est alors possible de déterminer la forme des lentilles correctrices et de positionner avec précision leur contour dans le repère de référence. En effet, les rectangles englobants encadrant, par définition, les lentilles correctrices, ils limitent la hauteur et la largeur des lentilles correctrices ainsi que leur position. Il en découle qu'il est possible de simplifier la détermination de la forme des lentilles correctrices en normalisant la forme des lentilles à partir des cotes A et B déterminées pour les rectangles englobants des lentilles, et en définissant un modèle paramétrique de la forme normalisée de chaque lentille.

Plus précisément, les segments des rectangles englobants des lentilles ayant déjà été positionnés, le contour des cercles est bien localisé et on sait que chaque segment touche au moins un point du contour de chaque cercle. Déterminer les contours des cercles de lunettes revient donc à étendre le modèle de la monture utilisé jusqu'ici pour déterminer les rectangles englobant des lentilles à des paramètres de forme permettant de décrire la forme des cercles de la monture.

Ainsi, au cours d'une première étape, on définit un modèle paramétrique de chaque lentille afin de décrire la forme des contours normalisés à l'aide d'au moins un paramètre.

Par exemple, dans une forme de réalisation, le modèle paramétrique peut par exemple être défini en réalisant une Analyse en Composantes Principales ACP (PCA en anglais pour Principal Component Analysis).

Pour cela, on définit préalablement une base comprenant une pluralité de contours de cercles des montures suffisamment grande et complète pour représenter la diversité des formes que l'on est susceptible de détecter. Les contours des cercles sont chacun décrits par un ensemble de points dans un repère donné, par exemple un repère cartésien lié au rectangle englobant comprenant un axe X' horizontal, parallèle aux segments haut et bas, et un axe Y' vertical, parallèle aux segments frontal et temporal. Optionnellement pour améliorer la précision, le repère peut en outre comprendre un axe Z' afin de prendre en compte la base monture ou d'une manière générale prendre en compte le fait que le contour du cercle ne tient pas exactement dans un plan.

On applique alors, à chaque contour de cercle de la base, des coefficients x1 et y1 aux coordonnées suivant les axes X' et Y', respectivement, de manière à conférer une même cote A et B à tous les contours et obtenir ainsi des contours dits « normalisés ». Par exemple, les contours normalisés peuvent être obtenus en divisant les coordonnées suivant l'axe X' et l'axe Y' des points de chaque contour de cercle de la base par la cote A et la cote B de la monture. Les contours normalisés ainsi obtenus entrent lors dans un carré de dimension 1 de côté. On notera que la forme originale du contour normalisé peut ensuite être retrouvée par l'opération inverse grâce aux cotes A et B de la monture.

On peut ensuite définir le modèle paramétrique de la forme normalisée de chaque lentille (troisième étape), par exemple en appliquant une ACP à l'ensemble des points des contours normalisés. Il en résulte une liste de composantes principales permettant de décrire sensiblement toute forme de contour normalisé. Ces composantes constituent un espace multidimensionnel qui décrit les formes de contours et dont l'origine est une « forme moyenne » de la base de contours, c'est-à-dire une forme qui se rapproche au mieux de toutes les formes de la base en minimisant la distance entre chaque point d'un contour normalisé de la base et le contour de la forme moyenne. En ajustant la première composante de l'ACP, la forme moyenne va se modifier globalement pour approcher le plus grand nombre de forme de cercles, parmi les plus communes. En ajoutant des composantes supplémentaires, la forme moyenne pourra s'ajuster dans les détails en permettant des variantes de formes plus rares.

Plus le nombre de composantes utilisé est grand, plus la forme décrite pourra avoir des détails spécifiques à une monture donnée ou plus rare.

On notera qu'avec quelques composantes principales (par exemple les cinq premières composantes), il est déjà possible de décrire la plupart des formes de cercles de montures du commerce avec une bonne précision.

L'intérêt de l'utilisation d'une ACP est que les composantes sont établies par ordre de pertinence pour approcher au mieux la forme réelle du contour avec un minimum de valeurs de composantes. Le nombre de composantes à optimiser pourra être ajusté dynamiquement en fonction de la précision et de la vitesse d'exécution que l'on veut obtenir.

Un premier paramètre de forme à optimiser selon l'invention peut être un vecteur comprenant un petit nombre de composantes de l'ACP, par exemple les trois premières composantes. Une fois ce paramètre optimisé il est possible de garder la forme obtenue comme départ pour une nouvelle optimisation et de prendre un second paramètre comprenant plus de composantes pour affiner la forme des cercles si la précision obtenue avec le premier paramètre n'est pas satisfaisante.

En variante, cette première étape de définition du modèle paramétrique peut être réalisée en déterminant une transformée de Fournier dont les paramètres permettent de définir toute forme de contour, les splines, B-Spline ou plus généralement NURBS (acronyme anglais de Non-Uniform Rational Basis Splines pour B-splines rationnelles non uniformes), ou toute méthode d'interpolation numérique permettant de définir un contour à partir d'un nombre limité de points ou de valeurs.

Puis, afin de déterminer la forme du cerclage, le procédé comprend une deuxième étape au cours de laquelle on projette dans la première et/ou la deuxième image une région d'intérêt 9 correspondant à tout ou partie du contour défini par le modèle paramétrique. Par exemple, dans le cas où la forme du bord intérieur du cerclage est optimisée, la région d'intérêt 9 peut correspondre au voisinage de ce bord intérieur.

La projection de la région d'intérêt 9 dans la première et/ou la deuxième image peut être aisément réalisée dans la mesure où la forme et la position dans chaque image des rectangles englobants des lentilles ont été déterminées préalablement et que le contour de la lentille est nécessairement adjacent aux segments des rectangles englobants (une fois ce modèle remis à l'échelle des rectangles englobants en effectuant une opération inverse à la normalisation).

Au cours d'une troisième étape, on détermine alors une similarité entre chaque point de la projection de la région d'intérêt 9 dans la première et/ou dans la deuxième image et le contour de la monture dans la première image et/ou dans la deuxième image. Par exemple, cette similarité peut être évaluée en établissant un score pour chaque image indiquant si chaque point de la projection de la région d'intérêt 9 dans l'image correspond à un contour dans ladite image. Plus le point de la projection de la région d'intérêt 9 est proche d'un contour marqué sur l'image, plus le score sera élevé. Ce score peut être maximisé pour chaque image disponible.

En fonction du score ainsi établi, l'un des paramètres de forme du modèle paramétrique peut alors être modifié au cours d'une quatrième étape, puis les étapes de projection de la région d'intérêt 9 du modèle paramétrique et de détermination de la similarité peuvent être réitérées jusqu'à l'obtention d'un score maximal.

Lorsque le score obtenu est maximal, cela implique que la projection de la région d'intérêt 9 dans les images est très proche du contour réel correspondant de la monture. Le ou les paramètres du modèle paramétrique qui ont été choisis pour effectuer ces projections correspondent alors aux paramètres réels du contour des lentilles.

La quatrième étape de détermination de la similarité peut en variante faire appel à des calculs de gradients, détections de contours et cartes de distance sur chaque image comme pour les paramètres de rectangles englobants.

On comprendra bien entendu que la détection de la forme des lentilles correctrices et le positionnement de leur contour peut être réalisé à partir de rectangles englobants déterminés suivant un procédé différent du procédé de détection automatique décrit ci-avant. Typiquement, les rectangles englobants peuvent être déterminés préalablement de manière conventionnelle, par exemple en plaçant manuellement les segments nasaux, temporaux et horizontaux sur une image prise par un opérateur à l'aide d'une caméra (détermination bidimensionnelle des rectangles englobants), ou sur deux images (détermination tridimensionnelle des rectangles englobants) et en déduire la position des rectangles englobants ainsi que les cotes A et B. Partant de ces données, il suffit ensuite d'utiliser le ou les paramètres de forme comme décrits ci-dessus et de maximiser la similarité pour en déduire le contour des lentilles correctrices.

Par ailleurs, partant des cotes et du galbe des rectangles englobants ainsi déterminés, il est également possible pour l'opérateur d'effectuer, de manière automatisée, le centrage de la monture.

Pour cela, les demi-écarts pupillaires peuvent être déterminés de manière automatisée à l'aide du modèle optimisé de la monture comme suit :
- identification du centre de chaque pupille du sujet sur une image, par exemple l'une parmi la première image, la deuxième image ou l'image de face (prise derrière un miroir sans tain), lorsque le sujet est en vision de loin.
- détermination de la position des centres des pupilles dans le repère de référence.
- déduction de la position des centres pupillaires dans le repère monture (système boxing).

On notera que la détermination de la position des centres des pupilles dans le repère de référence peut être aisément réalisée dans la mesure où les paramètres du modèle ont été optimisés. En particulier, dans le repère de référence lié à l'accessoire, les coordonnées suivant les axe X, Y et Z ont été optimisées, de sorte qu'il est aisé de positionner les centres des pupilles dans le repère de référence.

La hauteur droite (respectivement gauche) quant à elle, qui correspond à la distance entre le segment inférieur du rectangle englobant droite (respectivement gauche) et le centre de la pupille droite (respectivement gauche) peut être déterminée aisément à partir du modèle optimisé de la monture, à partir de la position dans le repère de référence des centres des pupilles et des segments inférieurs des rectangles englobants.

Par ailleurs, partant des cotes et du galbe des rectangles englobants ainsi déterminés, il est également possible pour l'opérateur de personnaliser, de manière automatisée, les lentilles correctrices des lunettes correspondant à la monture associée au modèle

Pour cela, l'angle de cap, l'angle pantoscopique et la distance verre-œil peuvent être déterminés de manière automatisée à l'aide du modèle optimisé de la monture.

Dans le cas où le repère de référence est obtenu par détection de cibles sur un accessoire porté par le sujet, les angles de cap et pantoscopique peuvent être déterminés aisément en détectant la position de l'accessoire sur l'une des images.

Dans le cas où le repère de référence est obtenu différemment, par exemple par identification de points singuliers du visage, ces angles peuvent être déterminés conformément aux méthodes faisant l'objet des documents WO2011/161087 ou FR 2 860 887 au nom de la Demanderesse.

## Revendications

1. Procédé de détermination automatique de paramètres en vue du centrage et/ou de la personnalisation de lentilles correctrices de lunettes, lesdites lunettes comprenant une monture et le procédé comprenant les étapes suivantes :
- S1 : prise d'une première image de la monture suivant un premier angle de vue,
- S2 : prise d'une deuxième image de la monture suivant un deuxième angle de vue, le premier angle de vue étant différent du deuxième angle de vue,
- S3 : identification, dans la première image et dans la deuxième image, de repères visuels et déduction, pour chaque image, d'un repère de référence lié à ces repères visuels,
- S4 : détermination d'un élément de la monture,
- S5 : définition d'un modèle initial de la monture dans le repère de référence à partir d'un ensemble de paramètres initiaux prédéfinis,
- S6 : définition d'une région d'intérêt (9) englobant l'élément de la monture dans le modèle initial,
- S7 : projection, dans la première image et dans la deuxième image, de la région d'intérêt (9),
- S8 : comparaison des projections de la région d'intérêt (9) dans la première image et dans la deuxième image et évaluation d'une similarité entre lesdites projections,
- S9 : modification d'au moins un des paramètres du modèle défini à l'étape S5,
- S10 : réitération des étapes S6 à S9 jusqu'à obtention d'un maximum de similarités entre les projections de la région d'intérêt (9) dans la première image et dans la deuxième image, et
- S11 : déduction de l'au moins un des paramètres du modèle associé aux projections présentant le maximum de similarités.
- centrage et/ou personnalisation desdites lentilles correctrices pour réaliser lesdites lunettes.

2. Procédé selon la revendication 1, dans lequel l'étape S8 de comparaison est réalisée par comparaison des gradients dans chacune des projections, par exemple à l'aide d'un filtre de Sobel de sorte à obtenir deux images filtrées, puis les deux images filtrées sont comparées en faisant la somme des carrés des différences point à point ou en calculant une corrélation en faisant le produit point à point.

3. Procédé selon l'une des revendications 1 et 2, dans lequel l'élément de la monture comprend un pontet et le ou les paramètres du modèle modifiés à l'étape S9 correspondent à une translation dans le repère de référence du modèle défini à l'étape S5 suivant un axe sensiblement normal à un plan sagittal de la tête d'un sujet ou suivant un axe sensiblement normal à un plan coronal de la tête dudit sujet
la première image et la deuxième image étant prises au cours des étapes S1 et S2 par des dispositifs de prise de vue dont les axes de visée forment tous deux un angle non nul avec un plan de symétrie de la monture, par exemple un angle de +10° et de -10°, respectivement.

4. Procédé selon la revendication 3, dans lequel, lorsque le ou les paramètres du modèle modifiés à l'étape S9 correspondent à une translation dans le repère de référence du modèle défini à l'étape S5 suivant l'axe normal au plan sagittal, le procédé comprend en outre, préalablement à l'étape S8 de comparaison, une étape de transformation de la projection de la région d'intérêt (9) dans la deuxième image par application, à la projection de la région d'intérêt (9) dans une deuxième image, d'une symétrie axiale par rapport à un plan normal à la deuxième image et passant par le centre de la deuxième image de sorte à obtenir une projection miroir, l'étape S8 de comparaison étant appliquée à ladite projection miroir.

5. Procédé selon la revendication 4, dans lequel les repères visuels comprennent des cibles fixées sur un accessoire solidaire de la monture et dans lequel, au cours de l'étape S9, un seul paramètre est modifié, ledit paramètre correspondant à une translation suivant l'un des axes du repère de référence.

6. Procédé selon l'une des revendications 1 et 2, dans lequel l'élément de la monture comprend un tenon gauche ou un tenon droit, le ou les paramètres du modèle qui sont modifiés à l'étape S9 sont choisis de sorte à modifier une inclinaison de la région d'intérêt (9) par rapport à un plan tangent à des segments verticaux d'un rectangle (8) englobant l'une des lentilles correctrices, la première image étant prise au cours de l'étape S1 par un dispositif de prise de vue (3) dont un axe de visée est sensiblement compris dans un plan sagittal d'une tête du sujet et la deuxième image étant prise au cours de l'étape S2 par un dispositif de prise de vue (4, 5) dont un axe de visée forme un angle non nul avec le plan de symétrie, par exemple un angle de 10°, le dispositif de prise de vue (4, 5) prenant la deuxième image étant de préférence positionné par rapport au plan de symétrie de sorte à être plus proche du tenon déterminé comme élément de la monture à l'étape S4 que de l'autre tenon de la monture.

7. Procédé selon l'une des revendications 1 à 6, comprenant en outre, suite à l'étape S11, une étape de détection d'un contour de la monture dans les projections, dans la première image et dans la deuxième image, de la région d'intérêt (9), de sorte à déterminer des paramètres d'au moins un rectangle (8) englobant des lentilles.

8. Procédé selon la revendication 7, dans lequel :
- la première image et la deuxième image sont prises à l'aide d'un premier dispositif de prise de vue (3, 4, 5) et d'un deuxième dispositif de prise de vue (3, 4, 5), respectivement, le premier dispositif de prise de vue et le deuxième dispositif de prise de vue formant chacun un angle différent avec un plan de symétrie de la monture, le premier dispositif de prise de vue étant plus proche d'un tenon gauche de la monture tandis que le deuxième dispositif de prise de vue est plus proche d'un tenon droit de ladite monture et
- l'étape de détection d'un contour comprend une sous-étape de détection de l'un au moins parmi un contour interne droit de la monture et un contour externe droit de la monture dans la projection de la région d'intérêt (9) dans la première image et une sous-étape de détermination de l'un au moins parmi un contour interne gauche de la monture et contour externe gauche dans la projection de la région d'intérêt (9) dans la deuxième image, respectivement.

9. Procédé selon la revendication 8, comprenant en outre, suite à la détection des contours internes et/ou externes droit et gauche de la monture, une étape de déduction d'une position, dans le repère de référence, de segments verticaux internes et/ou externes des rectangles (8) englobant des lentilles correctrices.

10. Procédé selon l'une des revendications 1 à 9, comprenant en outre, préalablement à l'étape S3, une étape supplémentaire au cours de laquelle une troisième image de la monture est acquise, la ou les troisième(s) image(s) pouvant être prises suivant un même point de vue ou un point de vue différent que la première image et/ou la deuxième image, les étapes S3 à S11 étant alors mises en œuvre sur la première, la deuxième et la ou le(s) troisième(s) image(s).

11. Procédé de détermination d'une forme d'un contour d'une lentille pour une monture, ledit procédé comprenant les étapes suivantes :
- détermination automatique de paramètres définissant un rectangle (8) englobant de la lentille selon l'une des revendications 7 à 9, et
- détermination de la forme de la lentille à partir des paramètres ainsi déterminés de la monture.

12. Procédé selon la revendication 11, dans lequel l'étape de détermination de la forme de la lentille comprend les sous-étapes suivantes :
- normalisation de la forme de la lentille à partir des paramètres définissant le rectangle (8) englobant de la lentille, et
- définition d'un modèle paramétrique de la forme normalisée de la lentille, le modèle paramétrique pouvant être réalisée par l'utilisation de l'une au moins des méthodes suivantes : analyse en composantes principales, détermination d'une transformée de Fournier, splines, B-Spline, B-splines rationnelles non uniformes (NURBS), la détermination de la forme de la lentille pouvant être alors obtenue par les sous-étapes suivantes :
- projection d'une région d'intérêt (9) correspondant à tout ou partie du contour défini par le modèle paramétrique dans la première image et/ou la deuxième image,
- évaluation d'une similarité entre chaque point de la projection de la région d'intérêt (9) dans la première image et dans la deuxième image et un contour dans ladite image, par exemple en établissant un score pour la première image et la deuxième image indiquant si chaque point de la projection de la région d'intérêt (9) dans l'image correspond à un contour dans ladite image et en comparant les gradients,
- modification d'au moins un paramètre du modèle paramétrique,
- réitération des étapes de projection et d'évaluation jusqu'à obtention d'un maximum de similarité entre la projection de la région d'intérêt (9) dans la première image et dans la deuxième image et le contour, et
- déduction du ou des paramètres du modèle paramétrique correspondant au contour de la lentille.

13. Dispositif de détermination automatique de paramètres en vue du centrage et/ou de la personnalisation de lentilles correctrices de lunettes, lesdites lunettes comprenant une monture, le dispositif comprenant des moyens pour la mise en œuvre d'un procédé de détermination selon l'une des revendications 1 à 12 comprenant :
- des moyens de prise d'une première image de la monture suivant un premier angle de vue,
- des moyens de prise d'une deuxième image de la monture suivant un deuxième angle de vue, le premier angle de vue étant différent du deuxième angle de vue,
- des moyens d'identification, dans la première image et dans la deuxième image, de repères visuels et déduction, pour chaque image, d'un repère de référence lié à ces repères visuels,
- des moyens de détermination d'un élément de la monture,
- des moyens de définition d'un modèle initial de la monture dans le repère de référence à partir d'un ensemble de paramètres initiaux prédéfinis,
- des moyens de définition d'une région d'intérêt (9) englobant l'élément de la monture dans le modèle initial,
- des moyens de projection, dans la première image et dans la deuxième image, de la région d'intérêt (9),
- des moyens de comparaison des projections de la région d'intérêt (9) dans la première image et dans la deuxième image et évaluation d'une similarité entre lesdites projections,
- des moyens de modification d'au moins un des paramètres du modèle défini à l'étape S5,
- des moyens de réitération des étapes S6 à S9 jusqu'à obtention d'un maximum de similarités entre les projections de la région d'intérêt (9) dans la première image et dans la deuxième image,
- des moyens de déduction de l'au moins un des paramètres du modèle associé aux projections présentant le maximum de similarités.

14. Système de détermination automatique de paramètres en vue du centrage et/ou de la personnalisation de lentilles correctrices de lunettes, lesdites lunettes comprenant une monture, le système comprenant un dispositif de détermination selon la revendication 13 et des cibles fixées sur un accessoire solidaire de la monture, les repères visuels comprenant les cibles.

15. Procédé de détection automatique d'un contour d'une lentille de lunette, ledit procédé comprenant les étapes suivantes :
(i) acquisition d'au moins une image de la lentille,
(ii) détermination d'un rectangle englobant de la lentille dans ladite image conformément aux étapes du procédé selon l'une des revendications 7 à 9, ledit rectangle englobant comprenant au moins une cote correspondant à une largeur du rectangle englobant et une cote correspondant à une hauteur du rectangle englobant,
(iii) définition d'un modèle paramétrique du contour de la lentille
(iv) projection dans l'image d'une région d'intérêt correspondant à tout ou partie du contour défini par le modèle paramétrique,
(v) évaluation d'une similarité entre chaque point de la projection de la région d'intérêt dans l'image et un contour dans ladite image,
(vi) modification d'au moins un paramètre du modèle paramétrique,
(vii) réitération des étapes (iv) de projection et (v) d'évaluation jusqu'à obtention d'un maximum de similarité entre la projection de la région d'intérêt et le contour et,
(viii) déduction du ou des paramètres du modèle paramétrique correspondant au contour de la lentille.

## Patentansprüche

1. Verfahren zum automatischen Bestimmen von Parametern im Hinblick auf die Zentrierung und/oder Individualisierung von korrigierenden Linsen für eine Brille, wobei die Brille eine Fassung umfasst und wobei das Verfahren die folgenden Schritte umfasst:
- S1: Aufnehmen eines ersten Bildes der Fassung aus einem ersten Betrachtungswinkel,
- S2: Aufnehmen eines zweiten Bildes der Fassung aus einem zweiten Betrachtungswinkel, wobei der erste Betrachtungswinkel von dem zweiten Betrachtungswinkel verschieden ist,
- S3: Identifizieren, in dem ersten Bild und in dem zweiten Bild, von visuellen Markierungen und Ableiten, für jedes Bild, eines mit diesen visuellen Markierungen zusammenhängenden Referenzbezugssystems,
- S4: Bestimmen eines Elements der Fassung,
- S5: Definieren eines Ausgangsmodells der Fassung in dem Referenzbezugssystem ausgehend von einem Satz vorgegebener Ausgangsparameter,
- S6: Definieren eines interessierenden Bereichs (9), der das Element der Fassung in dem Ausgangsmodell umschließt,
- S7: Projizieren des interessierenden Bereichs (9) in das erste Bild und in das zweite Bild,
- S8: Vergleichen der Projektionen des interessierenden Bereichs (9) in dem ersten Bild und in dem zweiten Bild und Beurteilen einer Ähnlichkeit zwischen den Projektionen,
- S9: Ändern von mindestens einem der Parameter des im Schritt S5 definierten Modells,
- S10: Wiederholen der Schritte S6 bis S9 bis zum Erhalten eines Maximums von Ähnlichkeiten zwischen den Projektionen des interessierenden Bereichs (9) in dem ersten Bild und in dem zweiten Bild, und
- S11: Ableiten des mindestens einen der Parameter des Modells, das den Projektionen zugeordnet ist, die das Maximum von Ähnlichkeiten aufweisen.
- Zentrieren und/oder Individualisieren der korrigierenden Linsen zum Herstellen der Brille.

2. Verfahren nach Anspruch 1, wobei der Schritt S8 des Vergleichens durch Vergleichen der Gradienten in jeder der Projektionen ausgeführt wird, zum Beispiel mithilfe eines Sobel-Filters, so dass zwei gefilterte Bilder erhalten werden, dann die beiden gefilterten Bilder verglichen werden, indem die Summe der Quadrate der Punkt-zu-Punkt-Differenzen gebildet wird oder indem eine Korrelation durch Bilden des Punkt-zu-Punkt-Produkts berechnet wird.

3. Verfahren nach einem der Ansprüche 1 und 2, wobei das Element der Fassung einen Steg umfasst und der oder die im Schritt S9 geänderten Parameter des Modells einer Translation des im Schritt S5 definierten Modells in dem Referenzbezugssystem entlang einer Achse, die im Wesentlichen senkrecht zu einer Sagittalebene des Kopfes einer Person verläuft, oder entlang einer Achse, die im Wesentlichen senkrecht zu einer Koronalebene des Kopfes der Person verläuft, entsprechen,
wobei das erste Bild und das zweite Bild während der Schritte S1 und S2 von Aufnahmevorrichtungen aufgenommen werden, deren Sichtachsen beide einen Winkel ungleich null mit einer Symmetrieachse der Fassung bilden, zum Beispiel einen Winkel von +10° beziehungsweise -10°.

4. Verfahren nach Anspruch 3, wobei, wenn der oder die im Schritt S9 geänderten Parameter des Modells einer Translation des im Schritt S5 definierten Modells in dem Referenzbezugssystem entlang der zur Sagittalebene senkrechten Achse entsprechen, das Verfahren ferner, vor dem Schritt S8 des Vergleichens, einen Schritt des Transformierens der Projektion des interessierenden Bereichs (9) in dem zweiten Bild umfasst durch Anwenden, auf die Projektion des interessierenden Bereichs (9) in einem zweiten Bild, einer axialen Symmetrie in Bezug auf eine Ebene, die senkrecht zu dem zweiten Bild und durch den Mittelpunkt des zweiten Bildes verläuft, so dass eine spiegelbildliche Projektion erhalten wird, wobei der Schritt S8 des Vergleichens auf die spiegelbildliche Projektion angewandt wird.

5. Verfahren nach Anspruch 4, wobei die visuellen Markierungen Targets umfassen, die an einem mit der Fassung fest verbundenen Zubehörteil befestigt sind, und wobei während des Schritts S9 ein einziger Parameter geändert wird, wobei der Parameter einer Translation entlang einer der Achsen des Referenzbezugsystems entspricht.

6. Verfahren nach einem der Ansprüche 1 und 2, wobei das Element der Fassung eine linke Backe oder eine rechte Backe umfasst, der oder die Parameter des Modells, die im Schritt S9 geändert werden, so gewählt sind, dass eine Neigung des interessierenden Bereichs (9) in Bezug auf eine Ebene geändert wird, die vertikale Segmente eines eine der korrigierenden Linsen umschließenden Rechtecks (8) tangiert, wobei das erste Bild während des Schritts S1 von einer Aufnahmevorrichtung (3) aufgenommen wird, bei der eine Sichtachse im Wesentlichen in einer Sagittalebene eines Kopfes der Person enthalten ist, und wobei das zweite Bild während des Schritts S2 von einer Aufnahmevorrichtung (4, 5) aufgenommen wird, bei der eine Sichtachse einen Winkel ungleich null mit der Symmetrieebene bildet, zum Beispiel einen Winkel von 10°, wobei die das zweite Bild aufnehmende Aufnahmevorrichtung (4, 5) bevorzugt in Bezug auf die Symmetrieebene so positioniert ist, dass sie der im Schritt S4 als Element der Fassung bestimmten Backe näher als der anderen Backe der Fassung ist.

7. Verfahren nach einem der Ansprüche 1 bis 6, umfassend ferner, nach dem Schritt S11, einen Schritt des Detektierens einer Kontur der Fassung in den Projektionen des interessierenden Bereichs (9) in dem ersten Bild und in dem zweiten Bild, so dass Parameter mindestens eines Linsen umschließenden Rechtecks (8) bestimmt werden.

8. Verfahren nach Anspruch 7, wobei:
- das erste Bild und das zweite Bild mithilfe einer ersten Aufnahmevorrichtung (3, 4, 5) beziehungsweise einer zweiten Aufnahmevorrichtung (3, 4, 5) aufgenommen werden, wobei die erste Aufnahmevorrichtung und die zweite Aufnahmevorrichtung jeweils einen unterschiedlichen Winkel mit einer Symmetrieebene der Fassung bilden, wobei die erste Aufnahmevorrichtung einer linken Backe der Fassung näher ist, während die zweite Aufnahmevorrichtung einer rechten Backe der Fassung näher ist, und
- der Schritt des Detektierens einer Kontur einen Teilschritt des Detektierens von mindestens einer unter einer rechten Innenkontur der Fassung und einer rechten Außenkontur der Fassung in der Projektion des interessierenden Bereichs (9) in dem ersten Bild beziehungsweise einen Teilschritt des Bestimmens von mindestens einer unter einer linken Innenkontur der Fassung und linken Außenkontur in der Projektion des interessierenden Bereichs (9) in dem zweiten Bild umfasst.

9. Verfahren nach Anspruch 8, umfassend ferner, nach dem Detektieren der rechten und linken Innen- und/oder Außenkonturen der Fassung, einen Schritt des Ableitens einer Position, in dem Referenzbezugssystem, von inneren und/oder äußeren vertikalen Segmenten der korrigierende Linsen umschließenden Rechtecke (8).

10. Verfahren nach einem der Ansprüche 1 bis 9, umfassend ferner, vor dem Schritt S3, einen zusätzlichen Schritt, während dessen ein drittes Bild der Fassung erfasst wird, wobei das oder die dritte(n) Bild(er) gemäß einem selben Betrachtungspunkt oder einem unterschiedlichen Betrachtungspunkt wie das erste Bild und/oder das zweite Bild aufgenommen werden kann(können), wobei die Schritte S3 bis S11 dann an dem ersten, dem zweiten und dem oder den dritten Bild(ern) durchgeführt werden.

11. Verfahren zum Bestimmen einer Form einer Kontur einer Linse für eine Fassung, wobei das Verfahren die folgenden Schritte umfasst:
- automatisches Bestimmen von Parametern, die ein umschließendes Rechteck (8) der Linse definieren, nach einem der Ansprüche 7 bis 9, und
- Bestimmen der Form der Linse ausgehend von den so bestimmten Parametern der Fassung.

12. Verfahren nach Anspruch 11, wobei der Schritt des Bestimmens der Form der Linse die folgenden Teilschritte umfasst:
- Normalisieren der Form der Linse ausgehend von den Parametern, die das umschließende Rechteck (8) der Linse definieren, und
- Definieren eines parametrischen Modells der normalisierten Form der Linse, wobei das parametrische Modell durch die Verwendung von mindestens einer der folgenden Methoden ausgeführt werden kann: Hauptkomponentenanalyse, Bestimmen einer FourierTransformation, Splines, B-Spline, nicht-uniforme rationale B-Splines (NURBS), wobei das Bestimmen der Form der Linse dann durch die folgenden Teilschritte erhalten werden kann:
- Projizieren eines interessierenden Bereichs (9), welcher der gesamten oder einem Teil der durch das parametrische Modell definierten Kontur entspricht, in das erste Bild und/oder das zweite Bild,
- Beurteilen einer Ähnlichkeit zwischen jedem Punkt der Projektion des interessierenden Bereichs (9) in dem ersten Bild und in dem zweiten Bild und einer Kontur in dem Bild, zum Beispiel, indem ein Score für das erste Bild und das zweite Bild ermittelt wird, der der angibt, ob jeder Punkt der Projektion des interessierenden Bereichs (9) in dem Bild einer Kontur in dem Bild entspricht, und indem die Gradienten verglichen werden,
- Ändern mindestens eines Parameters des parametrischen Modells,
- Wiederholen der Schritte des Projizierens und Beurteilens bis zum Erhalten eines Maximums von Ähnlichkeiten zwischen der Projektion des interessierenden Bereichs (9) in dem ersten Bild und in dem zweiten Bild und der Kontur, und
- Ableiten des oder der Parameter des parametrischen Modells, das der Kontur der Linse entspricht.

13. Vorrichtung zum automatischen Bestimmen von Parametern im Hinblick auf die Zentrierung und/oder Individualisierung von korrigierenden Linsen für eine Brille, wobei die Brille eine Fassung umfasst, wobei die Vorrichtung Mittel zum Durchführen eines Verfahrens zum Bestimmen nach einem der Ansprüche 1 bis 12 umfasst, die umfassen:
- Mittel zum Aufnehmen eines ersten Bildes der Fassung aus einem ersten Betrachtungswinkel,
- Mittel zum Aufnehmen eines zweiten Bildes der Fassung aus einem zweiten Betrachtungswinkel, wobei der erste Betrachtungswinkel von dem zweiten Betrachtungswinkel verschieden ist,
- Mittel zum Identifizieren, in dem ersten Bild und in dem zweiten Bild, von visuellen Markierungen und Ableiten, für jedes Bild, eines mit diesen visuellen Markierungen zusammenhängenden Referenzbezugssystems,
- Mittel zum Bestimmen eines Elements der Fassung,
- Mittel zum Definieren eines Ausgangsmodells der Fassung in dem Referenzbezugssystem ausgehend von einem Satz vorgegebener Ausgangsparameter,
- Mittel zum Definieren eines interessierenden Bereichs (9), der das Element der Fassung in dem Ausgangsmodell umschließt,
- Mittel zum Projizieren des Bereichs von Interesse (9) in das erste Bild und in das zweite Bild,
- Mittel zum Vergleichen der Projektionen des interessierenden Bereichs (9) in dem ersten Bild und in dem zweiten Bild und Beurteilen einer Ähnlichkeit zwischen den Projektionen,
- Mittel zum Ändern mindestens eines der Parameter des im Schritt S5 definierten Modells,
- Mittel zum Wiederholen der Schritte S6 bis S9 bis zum Erhalten eines Maximums von Ähnlichkeiten zwischen den Projektionen des interessierenden Bereichs (9) in dem ersten Bild und in dem zweiten Bild,
- Mittel zum Ableiten des mindestens einen der Parameter des Modells, das den Projektionen zugeordnet ist, die das Maximum von Ähnlichkeiten aufweisen.

14. System zum automatischen Bestimmen von Parametern im Hinblick auf die Zentrierung und/oder Individualisierung von korrigierenden Linsen für eine Brille, wobei die Brille eine Fassung umfasst, wobei das System eine Vorrichtung zum Bestimmen nach Anspruch 13 umfasst und Targets, die an einem mit der Fassung fest verbundenen Zubehörteil befestigt sind, wobei die visuellen Markierungen die Targets umfassen.

15. Verfahren zum automatischen Detektieren einer Kontur einer Linse für eine Brille, wobei das Verfahren die folgenden Schritte umfasst:
(i) Erfassen mindestens eines Bildes der Linse,
(ii) Bestimmen eines umschließenden Rechtecks der Linse in dem Bild gemäß den Schritten des Verfahrens nach einem der Ansprüche 7 bis 9, wobei das umschließende Rechteck mindestens ein Maß, das einer Breite des umschließenden Rechtecks entspricht, und ein Maß, das einer Höhe des umschließenden Rechtecks entspricht, umfasst,
(iii) Definieren eines parametrischen Modells der Kontur der Linse
(iv) Projizieren eines interessierenden Bereichs, welcher der gesamten oder einem Teil der durch das parametrische Modell definierten Kontur entspricht, in das Bild,
(v) Beurteilen einer Ähnlichkeit zwischen jedem Punkt der Projektion des interessierenden Bereichs in dem Bild und einer Kontur in dem Bild,
(vi) Ändern mindestens eines Parameters des parametrischen Modells,
(vii) Wiederholen der Schritte (iv) des Projizierens und (v) des Beurteilens bis zum Erhalten eines Maximums von Ähnlichkeit zwischen der Projektion des interessierenden Bereichs und der Kontur und,
(viii) Ableiten des oder der Parameter des parametrischen Modells, das der Kontur der Linse entspricht.

## Claims

1. Method for automatically determining parameters with a view to centring and/or personalizing corrective lenses of glasses, said glasses comprising a frame and the method comprising the following steps:
- S1: taking a first image of the frame at a first viewing angle,
- S2: taking a second image of the frame at a second viewing angle, the first viewing angle being different from the second viewing angle,
- S3: identifying visual reference points in the first image and in the second image, and deducing, for each image, a reference coordinate system associated with these visual reference points,
- S4: determining an element of the frame,
- S5: defining an initial model of the frame in the reference coordinate system based on a set of predefined initial parameters,
- S6: defining a region of interest (9) encompassing the element of the frame in the initial model,
- S7: projecting the region of interest (9) into the first image and into the second image,
- S8: comparing the projections of the region of interest (9) in the first image and in the second image and evaluating a similarity between said projections,
- S9: modifying at least one of the parameters of the model defined in step S5,
- S10: reiterating steps S6 to S9 until a maximum of similarities between the projections of the region of interest (9) in the first image and in the second image is obtained, and
- S11: deducing the at least one of the parameters of the model associated with the projections having the maximum of similarities.
- centring and/or personalizing said corrective lenses so as to produce said glasses.

2. Method according to Claim 1, wherein the comparing step S8 is carried out by comparing gradients in each of the projections, for example through application of a Sobel filter to obtain two filtered images, then comparison of the two filtered images by summing the squares of point-by-point differences or by computing a correlation via a point-by-point product.

3. Method according to either of Claims 1 and 2, wherein the element of the frame comprises a bridge and the one or more parameters of the model that are modified in step S9 correspond to a translation in the reference coordinate system of the model defined in step S5 along an axis substantially normal to a sagittal plane of the head of a subject or along an axis substantially normal to a coronal plane of the head of said subject,
the first image and second image being taken in steps S1 and S2 by imaging devices the axes of sight of which both make a non-zero angle to a plane of symmetry of the frame, for example an angle of +10° and of -10°, respectively.

4. Method according to Claim 3, wherein, when the one or more parameters of the model that are modified in step S9 correspond to a translation in the reference coordinate system of the model defined in step S5 along the axis normal to the sagittal plane, the method further comprises, prior to the comparing step S8, a step of converting the projection of the region of interest (9) in the second image by applying, to the projection of the region of interest (9) in a second image, an axial symmetry with respect to a plane normal to the second image and passing through the centre of the second image so as to obtain a mirror projection, the comparing step S8 being applied to said mirror projection.

5. Method according to Claim 4, wherein the visual reference points comprise targets fastened to an accessory secured to the frame and wherein, in step S9, a single parameter is modified, said parameter corresponding to a translation along one of the axes of the reference coordinate system.

6. Method according either of Claims 1 and 2, wherein the element of the frame comprises a left end piece or right end piece, and the one or more parameters of the model that are modified in step S9 are selected so as to modify a tilt of the region of interest (9) relative to a plane tangent to vertical segments of a rectangle (8) boxing one of the corrective lenses, the first image being taken in step S1 by an imaging device (3) an axis of sight of which is substantially contained in a sagittal plane of a head of the subject and the second image being taken in step S2 by an imaging device (4, 5) an axis of sight of which makes a non-zero angle to the plane of symmetry, for example an angle of 10°, the imaging device (4, 5) taking the second image preferably being positioned relative to the plane of symmetry so as to be closer to the end piece determined as the element of the frame in step S4 than to the other end piece of the frame.

7. Method according to any of Claims 1 to 6, further comprising, following step S11, a step of detecting an outline of the frame in the projections, in the first image and in the second image, of the region of interest (9), so as to determine parameters of at least one boxing rectangle (8) of the lenses.

8. Method according to Claim 7, wherein:
- the first image and second image are taken using a first imaging device (3, 4, 5) and a second imaging device (3, 4, 5), respectively, the first imaging device and second imaging device each making a different angle to a plane of symmetry of the frame, the first imaging device being closer to a left end piece of the frame while the second imaging device is closer to a right end piece of said frame, and
- the step of detecting an outline comprises a substep of detecting at least one among a right inner outline of the frame and a right outer outline of the frame in the projection of the region of interest (9) in the first image and a substep of determining at least one among a left inner outline of the frame and a left outer outline in the projection of the region of interest (9) in the second image, respectively.

9. Method according to Claim 8, further comprising, following detection of the right and left inner and/or outer outlines of the frame, a step of deducing a position, in the reference coordinate system, of inner and/or outer vertical segments of the boxing rectangles (8) of the corrective lenses.

10. Method according to any of Claims 1 to 9, further comprising, prior to step S3, an additional step in which a third image of the frame is acquired, the one or more third images possibly being taken from the same viewpoint as or a different viewpoint to the first image and/or second image, steps S3 to S11 then being implemented on the first, second and one or more third images.

11. Method for determining a shape of an outline of a lens for a frame, said method comprising the following steps:
- automatically determining parameters defining a boxing rectangle (8) of the lens according to any of Claims 7 to 9, and
- determining the shape of the lens based on the parameters thus determined of the frame.

12. Method according to Claim 11, wherein the step of determining the shape of the lens comprises the following substeps:
- normalizing the shape of the lens based on the parameters defining the boxing rectangle (8) of the lens, and
- defining a parametric model of the normalized shape of the lens, the parametric model being generable using at least one of the following methods: principal component analysis, determination of a Fournier transform, splines, B-spline, and non-uniform rational B-splines (NURBS), the shape of the lens then being determinable via the following substeps:
- projecting a region of interest (9) corresponding to all or part of the outline defined by the parametric model into the first image and/or second image,
- evaluating a similarity between each point of the projection of the region of interest (9) in the first image and in the second image and an outline in said image, for example by establishing a score for the first image and second image indicating whether each point of the projection of the region of interest (9) in the image corresponds to an outline in said image and by comparing gradients,
- modifying at least one parameter of the parametric model,
- reiterating the projecting and evaluating steps until a maximum similarity is obtained between the projection of the region of interest (9) in the first image and in the second image and the outline, and
- deducing the one or more parameters of the parametric model corresponding to the outline of the lens.

13. Device for automatically determining parameters with a view to centring and/or personalizing corrective lenses of glasses, said glasses comprising a frame, the device comprising means for implementing a determining method according to any of Claims 1 to 12 comprising:
- means for taking a first image of the frame at a first viewing angle,
- means for taking a second image of the frame at a second viewing angle, the first viewing angle being different from the second viewing angle,
- means for identifying visual reference points in the first image and in the second image, and deducing, for each image, a reference coordinate system associated with these visual reference points,
- means for determining an element of the frame,
- means for defining an initial model of the frame in the reference coordinate system based on a set of predefined initial parameters,
- means for defining a region of interest (9) encompassing the element of the frame in the initial model,
- means for projecting the region of interest (9) into the first image and into the second image,
- means for comparing the projections of the region of interest (9) in the first image and in the second image and evaluating a similarity between said projections,
- means for modifying at least one of the parameters of the model defined in step S5,
- means for reiterating steps S6 to S9 until a maximum of similarities between the projections of the region of interest (9) in the first image and in the second image is obtained,
- means for deducing the at least one of the parameters of the model associated with the projections having the maximum of similarities.

14. System for automatically determining parameters with a view to centring and/or personalizing corrective lenses of glasses, said glasses comprising a frame, the system comprising a determining device according to Claim 13 and targets fastened to an accessory secured to the frame, the visual reference points comprising the targets.

15. Method for automatically detecting an outline of a spectacle lens, said method comprising the following steps:
(i) acquiring at least one image of the lens,
(ii) determining a boxing rectangle of the lens in said image according to the steps of the method according to any of Claims 7 to 9, said boxing rectangle comprising at least one dimension corresponding to a width of the boxing rectangle and one dimension corresponding to a height of the boxing rectangle,
(iii) defining a parametric model of the outline of the lens,
(iv) projecting a region of interest corresponding to all or part of the outline defined by the parametric model into the image,
(v) evaluating a similarity between each point of the projection of the region of interest in the image and an outline in said image,
(vi) modifying at least one parameter of the parametric model,
(vii) reiterating projecting step (iv) and evaluating step (v) until a maximum of similarity between the projection of the region of interest and the outline is obtained, and
(viii) deducing the one or more parameters of the parametric model corresponding to the outline of the lens.
